# EUROPEAN PATENT SPECIFICATION

(11) **EP 3 883 850 B1**
(45) Date of publication and mention of the grant of the patent: **19.06.2024**
(21) Application number: 19886451.4
(22) Date of filing: 21.11.2019
(51) Int. Cl.: B64C 1/06, B64C 1/22, B60P 7/08, B64D 9/00

(54) **MODULAR CARGO SYSTEMS AND METHODS**
MODULARE FRACHTSYSTEME UND VERFAHREN
SYSTÈMES DE CHARGEMENTS MODULAIRES ET PROCÉDÉS ASSOCIÉS

(30) Priority: 21.11.2018 US 201862770318 P
(43) Date of publication of application: 29.09.2021
(73) Proprietor: Biosphere Aerospace, LLC, Carpinteria, CA 93013 (US)
(72) Inventor: HELOU, Elie Jr., Carpinteria, CA 93013 (US)
(74) Representative: Pure Ideas Limited
(86) International application number: PCT/US2019/062708
(87) International publication number: WO 2020/107008

(56) References cited:
- US-A- 2 808 009
- US-A- 2 808 009
- US-A- 5 921 593
- US-A1- 2010 054 890
- US-A1- 2010 276 538
- US-A1- 2018 045 438
- US-A1- 2018 194 267
- US-B1- 7 658 348
- US-B1- 9 205 910
- US-B2- 8 011 617
- US-B2- 8 608 110
- US-B2- 8 864 079
- US-B2- 9 815 543

## Description

### FIELD OF THE INVENTION

The field of the invention relates generally to transport of modular cargo containers and, more specifically, to intermodal transportation of modular cargo containers.

### BACKGROUND

US 2010/276538 A1 discloses a cargo aircraft system.

The basic unit for transporting goods has been the truck. Being the basic unit, the truck has defined limitations on intermodal containers that can typically be transported by ships, trains and trucks. Much of commerce today for which intermodal containers are most convenient are high volume, low weight products, computers being one example. Thus, volume instead of weight creates the limiting factor in the design of intermodal containers. As such, containers have grown to the maximum volume capacity of the basic unit, the truck.

While intermodal containers have greatly facilitated and lowered the cost of cargo transportation, air cargo has generally been excluded from participating in the intermodal cargo system. Aircraft of a size capable of carrying substantial cargo have typically been designed first as passenger aircraft. Cylindrical fuselages and the lack of large access ports in such passenger aircraft limit the use of such aircraft for truly intermodal cargo systems. Rather, the aircraft must become the basic unit with odd shaped and smaller sized containers. As a result, even with containerized cargo, a truck must be loaded with multiple individual containers for efficient distribution of air cargo.

The inability of aircraft to participate in intermodal container cargo systems has been disadvantageous to international commerce and air cargo systems remain both expensive and inconvenient to intermodal shipping. What is therefore needed are improved systems and methods for safely and efficiently transporting cargo containers via aircraft.

### BRIEF SUMMARY

An aircraft for carrying a cargo assembly is defined in claim 1. Preferred features of this aircraft are defined in the dependent claims.

Other features and aspects of the disclosed technology will become apparent from the following detailed description, taken in conjunction with the accompanying drawings, which illustrate, by way of example, the features in accordance with embodiments of the disclosed technology. The summary is not intended to limit the scope of any inventions described herein, which are defined solely by the claims attached hereto.

### BRIEF DESCRIPTION OF THE DRAWINGS

Illustrative embodiments of the present disclosure are described herein with reference to the accompanying drawings, in which:
FIG. 1 is a perspective view of a one embodiment of an aircraft.
FIG. 2 is a partial perspective view with portions broken away for clarity of the aircraft of FIG. 1.
FIG. 3 is a cross-sectional view taken transversely through the fuselage of the aircraft of FIG. 1.
FIG. 4 is a perspective view of a cargo assembly and possible combinations of containers forming a cargo assembly.
FIG. 5 is a partial exploded perspective view of the aircraft of FIG. 1.
FIG. 6 is a detailed perspective view of the spine and fairing supports of the aircraft of FIG. 5.
FIG. 7 is a front view of a fairing frame and the spine for the aircraft of FIG. 1 with a container in place.
FIG. 8 is a perspective view of the aircraft of FIG. 1 being loaded or unloaded by a truck.
FIG. 9 is a perspective view of the aircraft of FIG. 1 with the forward nose fairing section raised.
FIG. 10 is a perspective view of a frame structure of a cargo container.
FIG. 11 is a perspective view of a longer frame structure of a cargo container.
FIG. 12 is a perspective view of an exploded assembly of a cargo container.
FIG. 13 is a partial cross-sectional view of a panel illustrated in FIG. 12.
FIG. 14 is a detailed cross-sectional view of an assembled panel on a cargo container.
FIG. 15 is a cross-sectional view of a mount between the spine structure and a container.
FIG. 16 is an exploded perspective view of corner attachments and couplers.
FIG. 17 is an exploded perspective view of an embodiment of a cargo aircraft system in which the aircraft has a lower spine and load transfer structures supporting ends of the cargo assembly.
FIG. 18 is a simplified elevation view of a single-layer cargo assembly mounted on a spine with a pair of load transfer structures on either sides of the cargo assembly.
FIG. 19 is a perspective view of an embodiment of a load transfer structure.
FIG. 20 is a cross-sectional view taken transversely through a lower aircraft spine section.
FIG. 21 is a cut-out cross-sectional view taken transversely of a lower aircraft spine section.
FIG. 22 is an exploded perspective view showing components of a lower aircraft spine section.
FIG. 23 is a simplified elevation view of a single-layer cargo assembly mounted on a spine with load transfer structure supporting ends of the cargo assembly.
FIG. 24 is a simplified perspective view of an aircraft fuselage with a forward fairing, an aft fairing and aerodynamic fairings therebetween. The spine is not shown.
FIG. 25 is a perspective view of an aircraft with the forward, middle and aft fairings reed.
FIG. 26 is an enlarged perspective view along View A of FIG. 25 of a forward load transfer structure.
FIG. 27 is an enlarged partial perspective view of View B of FIG. 25 of an aft load transfer structure.
FIG. 28 is a perspective view of an aircraft showing the aft doors open.
FIG. 29 is a perspective view of an aircraft with the aft load transfer structure removed.
FIG. 30 is a side view of the aircraft of FIG. 29.
FIG. 31 is an enlarged view of the linking structure coupled to retaining frame.
FIG. 32 shows a trimetric view of an aircraft section including a section of an aircraft spine disposed alongships in accordance with the disclosed technology.
FIG. 33 shows a View A of FIG. 32 illustrating one of the pairs of the I-beams.
FIG. 34 shows a View B of FIG. 33 illustrating a lower section of one of the I- beams.
FIG. 35 shows a section of the aircraft spine where pairs of I-beams form passages alongships the aircraft.
FIG. 36 shows a process for transporting one or more containers on aircraft in accordance with embodiments of the present invention.
FIG. 37 shows a portion of a large aircraft system according to embodiments of the disclosed technology.
FIG. 38 shows a side view of the aircraft system of FIG. 37.
FIG. 39 shows a View C of the aircraft system of FIG. 38.
FIG. 40 shows another side view of the aircraft system.
FIG. 41 shows a View D-D of the aircraft system of FIG. 40.
FIG. 42 shows a View F illustrating further detail of the aircraft system of FIG. 41.
FIG. 43 shows a View E-E of the aircraft system of FIG. 40.
FIG. 44 shows a View G illustrating further detail of the aircraft system of FIG. 43.
FIG. 45 illustrates a 40' container configured to transport personnel.
FIG. 46 shows an aircraft system with a specialized pilot container.
FIG. 47 shows a process for attaching one or more containers to an aircraft in accordance with embodiments of the present invention.
FIG. 48 shows a top plan view of a drone-dedicated airport in accordance with a first example not part of the present invention.
FIG. 49 shows a top plan view of a a drone-dedicated airport in accordance with a second example not part of the present invention.
FIG. 50 shows a top plan view of a drone-dedicated airport in accordance with a third example not part of the present invention.
FIG. 51 shows a top plan view of a drone-dedicated airport in accordance with a fourth example not part of the present invention.
FIG. 52 shows a top plan view of a drone-dedicated airport in accordance with a fifth example not part of the present invention.

Like numerals refer to like parts throughout the several views of the drawings.

The figures are not exhaustive and do not limit the disclosure or the disclosed embodiments to the precise form disclosed.

### DETAILED DESCRIPTION OF THF EXEMPLARY EMBODIMENTS

### Aircraft for Carrying a Cargo Assembly

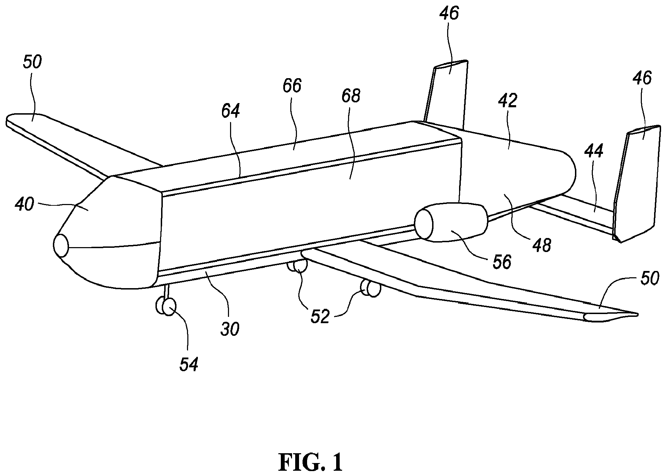

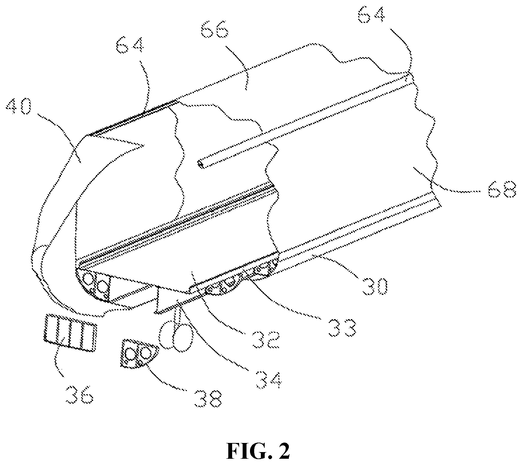

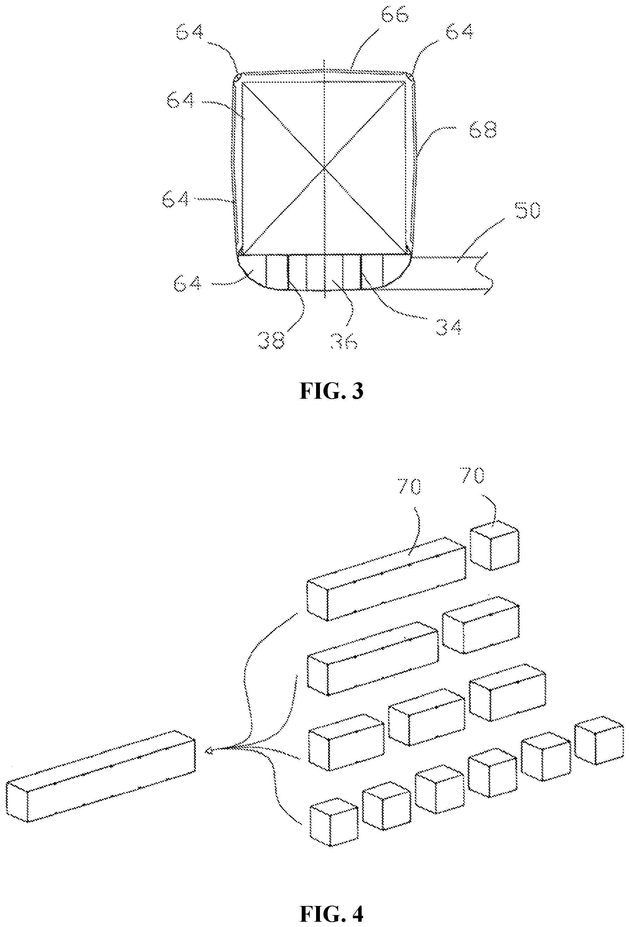

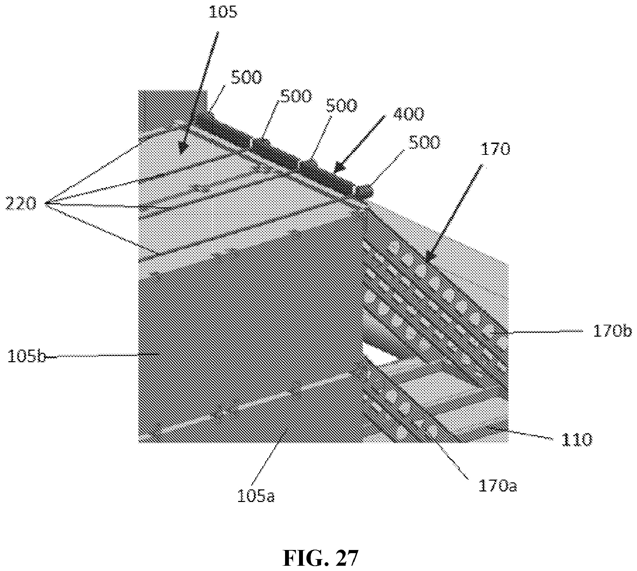

FIG. 1 illustrates an aircraft design with an integrating and supporting spine structure 30 having two ends. The details of the spine structure 30 are better illustrated in FIGS. 2 and 3. The spine structure 30 includes a floor 32 which may include rollers, raised longitudinal rails (see 110 in FIG. 27) and/or antifriction devices to facilitate longitudinal movement of one or more cargo containers along the surface of the floor 32. Restraining flanges 33 may run along each longitudinal side of the floor 32. In addition to the floor 32, the spine structure 30 may include I-spines 34 with bulkheads 36, 38 positioned periodically along the spine structure 30 and affixed to the floor 32 and the I-spines. The spine structure 30 becomes a rigid structure which is preferably sufficient to support the aircraft in flight when empty. An alternate design would have the spine needing one or more containers to provide enough rigidity for flight, see also U.S. Pat. Nos. 7,261,257, 7,699,267, 8,608,110, 9,108,720, and 9,949,227. It is understood that the I-beam spine may have C-sections, tubes, or many other commonly used geometries in air designs.

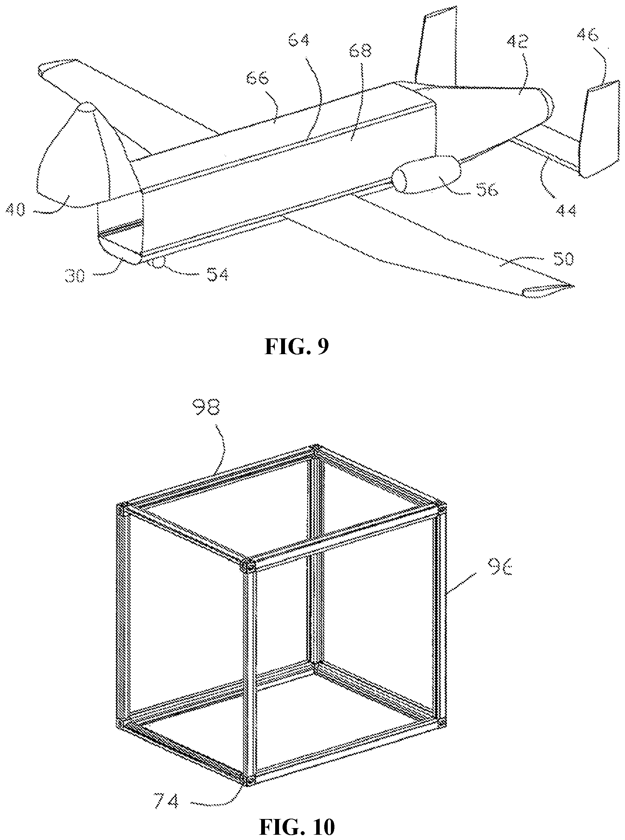

A forward fuselage 40 is located at one end of the spine structure 30. In one embodiment, the forward fuselage 40 includes a cockpit or a removable module that would be self-contained for a pilot. In another embodiment, the forward fuselage 40 is configured as a drone with no cockpit. In another embodiment, the aircraft may be configured as a drone with a self-contained permanent or removable module for an onboard monitoring pilote that would contain all of the safety and other requirements needed for a human to be onboard without modifying the remaining drone structures. The guidance and control of the aircraft may be located in the forward aerodynamic fairing but can also be located elsewhere with equal facility such as in the spine. In one embodiment, as shown in FIG. 9, the forward fuselage 40 may be pivotally mounted relative to the spine structure 30 to fully expose the interior cavity above the spine structure 30 from the forward end of the aircraft for loading or unloading of cargo container. In another embodiment, the forward fuselage 40 may be removed from association with the spine structure 30.

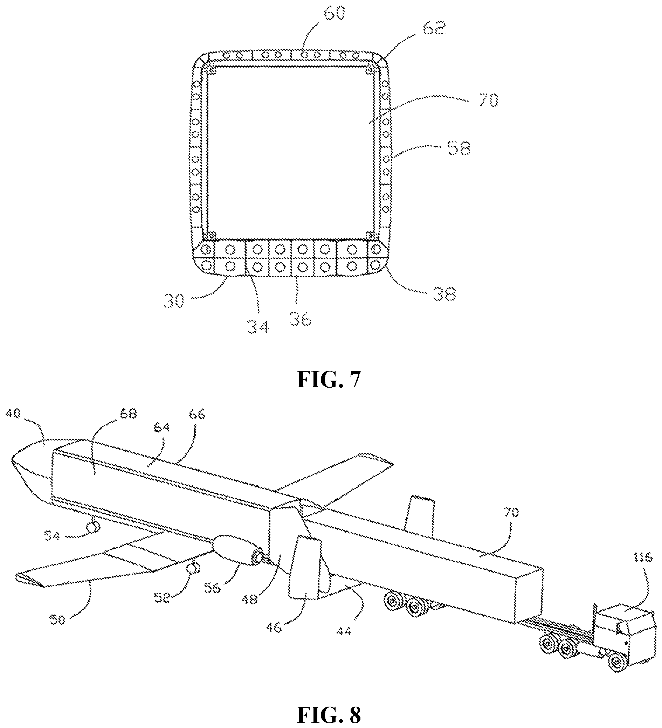

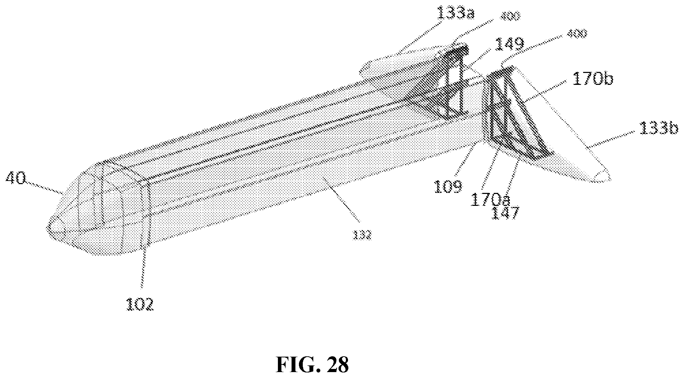

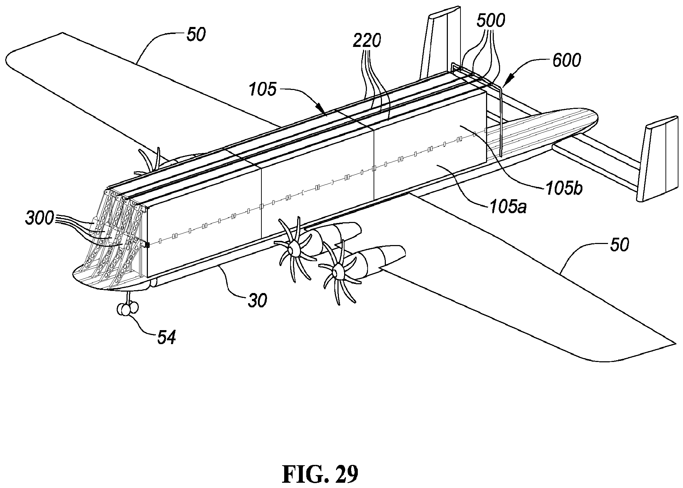

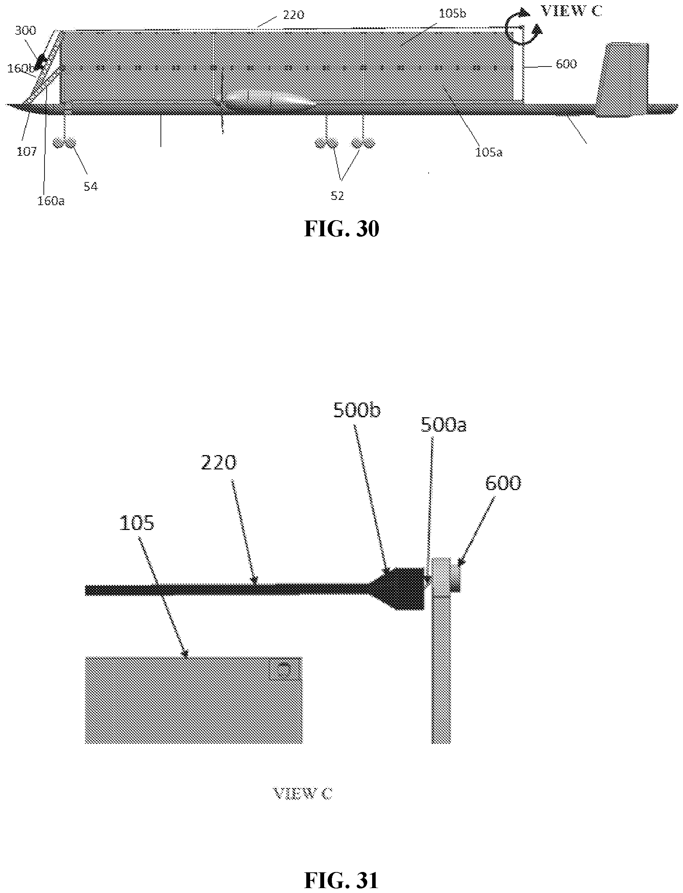

In one embodiment, an empennage 42 may be attached to the other end of the spine structure 30. The empennage 42 may include laterally extending horizontal stabilizers 44 with twin vertical stabilizers 46 positioned at the outer ends of the horizontal stabilizers 44. As illustrated in FIGS. 8 and 28, the rear fuselage 48 may form part of the empennage 42 and may be split vertically and pivotally mounted to either side of the main fuselage. In this manner, access is provided to the rear of the spine structure 30 across the ramp defined by the empennage 42 including the horizontal stabilizers 44. In another embodiment illustrated in FIGS. 29-30, the aft fairing 133 may be completely removed from association with the spine structure 30 as a unit, with the horizontal stabilizers 44 and vertical stabilizers 46 to remain coupled to the aft end 109 of the spine structure 30. Alternatively, the forward fairing 40 could be pivotally opened with the tensioning system located in the aft fairing.

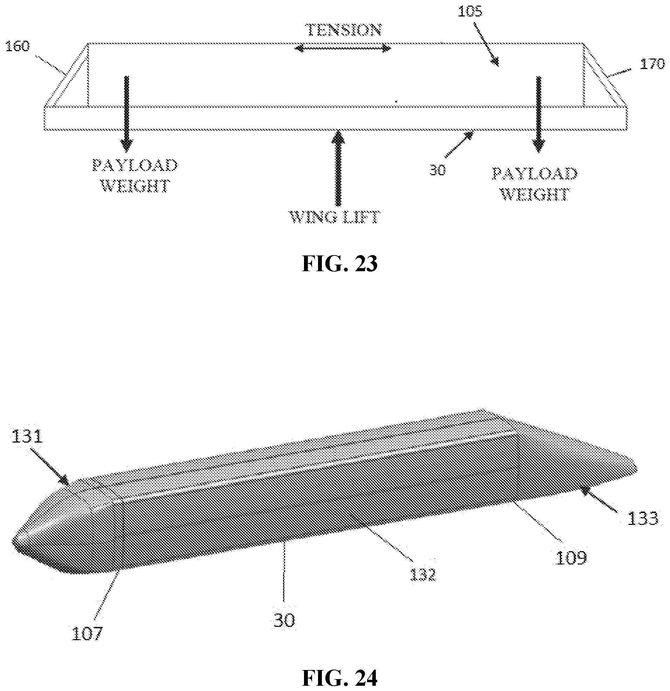

In one embodiment, wings 50 may be structurally associated with the spine structure 30. One or both of the wings 50 and the spine structure 30 may contain fuel tanks (not shown). Landing gear 52 may be provided under the spine structure 30 and/or under the wings 50. In another embodiment, the wings 50 may be removed from association with the spine as a unit as shown in FIG. 24. In a further embodiment, engines 56 may be directly mounted to the spine structure 30.

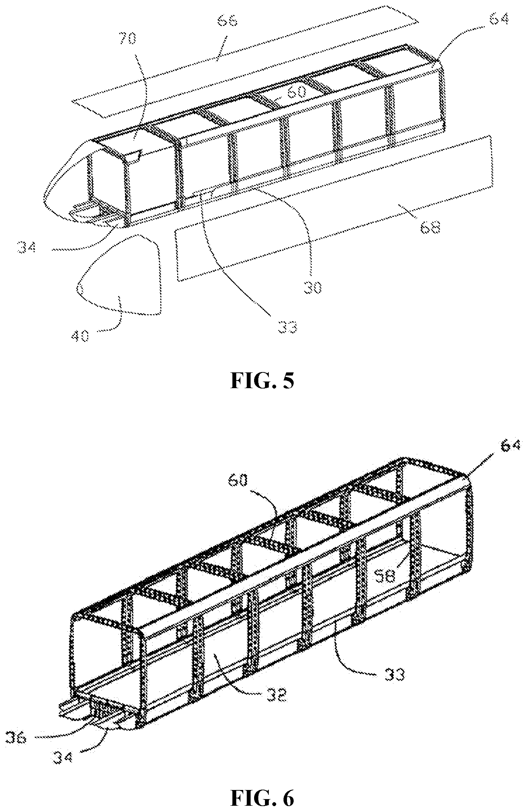

In one embodiment, framing may be provided to support aerodynamic fairings. The frame may include vertical elements 58 and horizontal elements 60 with corner elements 62 lying in transverse planes of the aircraft. One such frame is illustrated in greater detail in FIG. 7. The elements 58, 60 may be of an I-spine cross section with lightening holes as in conventional aircraft construction. Corner elements 64 may extend longitudinally at the intersections of the vertical elements 58 and horizontal elements 60. These corner elements 64 may provide structural rigidity to augment the strength of the spine structure 30 and certainly provide sufficient rigidity to retain fairing components in place on the frame 62. In FIG. 5, a top fairing panel 66 and a side fairing panel 68 are shown. A second side fairing panel 68 may also be deployed on the other side of the aircraft.

In another embodiment, the fairings may be of an extruded design and more or less made in one piece.

The aircraft is preferably configured to provide a cargo bay which is designed and sized to closely receive one or more cargo containers 70 forming right parallelepipeds which are preferably the sizes of intermodal containers. Such intermodal containers are typically of a given height and width and may vary incrementally in length. An alternative to the construction of a fairing is to define a cargo bay between the forward fuselage 40 and the empennage 42 may be to define the intermodal containers with aerodynamic surfaces. The forward fuselage 40 and the empennage 42 may transition to create an aerodynamic surface with the forward fuselage 40 and the empennage 42. The containers 70 may be designed to be compatible with truck or train transportation or even container ship transportation whether or not they have aerodynamic surfaces.

In the embodiments, the cargo containers 70 may provide strength to the spine structure 30. The spine structure 30 may be designed to be as light as possible. As such, the spine structure 30 may be capable of supporting takeoff loads, flight loads and landing loads of the aircraft when free of cargo. Alternatively the spine structure 30 may need one or more containers to provide flight rigidity. Additionally, the spine structure 30 may be sufficient to support compression loads upon landing even when fully loaded. The spine structure 30, however, may not be required to fully sustain bending and torsional loads in flight, landing and takeoff when a cargo container or multiple such containers are in place in the aircraft. The additional rigidity required may be supplied by the cargo containers 70. To this end, the containers 70 may be constructed with sufficient structure and rigidity as required and may be securely mounted to the spine structure 30 such that bending and torsional forces or other flight loads or even ground loads, as in loading and unloading, experienced by the spine structure 30 may be imposed upon the securely mounted container or containers 70.

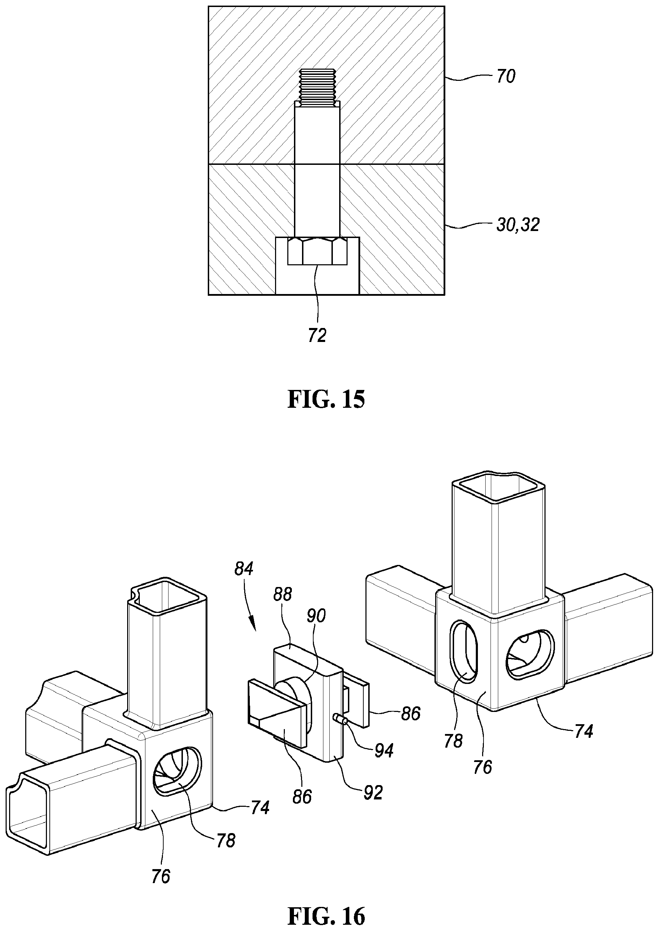

As illustrated in FIG. 15, mounts 72 may be provided on the spine structure 30. These mounts may, for example, be bolted or otherwise retained on the floor 32. Further, incremental adjustments may be provided in order that the mounts 72 may attach to the container or containers 70 while accommodating variations in container length and placement. Such incremental adjustment may be provided by patterns of attachment holes in the floor 32 to allow for lateral or longitudinal repositioning of the mounts 72 once the container or containers 72 are in place. The mount 72 may be a shoulder bolt 72 which extends between the spine structure 30 and a container 70. Such a bolt 72 may provide substantial shear resistance as well as tension loading. The mounts 72 may be located or positionable along the full length of the floor 32 or at incremental positions reflecting standard container sizes. In one embodiment, the mounts may face inwardly from the sides of the floor 32. Access ports through the fairings may be provided to allow access to the mounts 72. Alternatively, mechanisms may be employed which are automatic or remotely actuated. In another embodiment, the mounts 72 may be similar to current intermodal container attachments but designed for better fit to reduce or eliminate any slop between the mating parts.

Attachments 74 are illustrated in FIG. 16 as formed boxes 76 through which slots 78 extend. By employing the formed boxes 76, the slots 78 may terminate to provide an inner face. The attachments 74 may be located in the structure of the container or containers 70. As such, the attachments 74 may cooperate with the formed boxes 74 with slots 76 through the walls thereof. The formed boxes 76 may include thick walls on the outer side or bottom to receive the mounts 72.

To fix the attachments 74 to one another, couplers 84 may be employed. Each coupler 84 may include two heads 86 extending in opposite directions from a coupler body 88. The heads 86 may be undercut between the body 88 and each of the heads 86 to form opposed engaging surfaces on the inner sides of the head 86. The heads 86 may also fit within the slots 76 in one orientation. The heads 86 may have a convex surface for easier placement in the associated slots 76.

The couplers 84 may be formed such that the heads 86 are on a shaft rotatable within the body 88. A collar 90 may be separated from each of the heads 86 by substantially the thickness of the walls of the formed boxes 76 with the collar 90 being of sufficient diameter that the collar 90 cannot fit within the slots 78. The collar 90 may also provide access once the heads 86 are positioned in the slots 78 for rotation of the heads 86 into a locked orientation with slots 78. The body 88 is of sufficient size and includes flat sides 92 such that it is prevented from rotating by the floor 32. Once the head 86 have been properly located, a set screw 94 or other locking mechanism can be placed to insure that the heads 86 will not rotate relative to the attachments 74. The same mechanisms are employed between attachments 74 on adjacent containers 70. In one embodiment, the heads 86 may rotate separately.

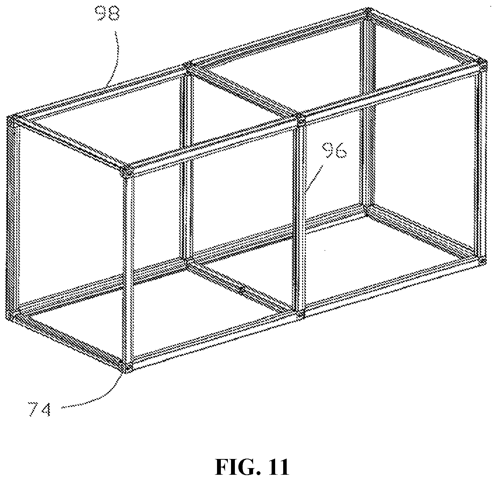

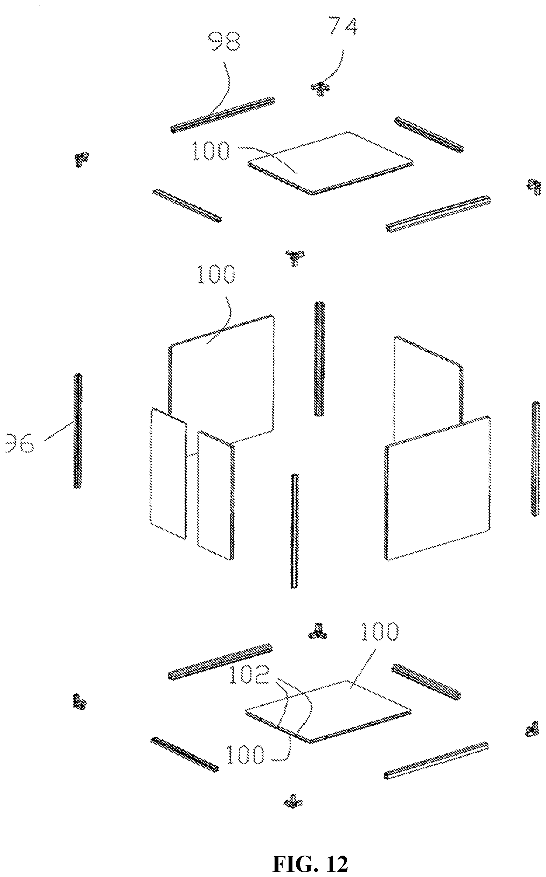

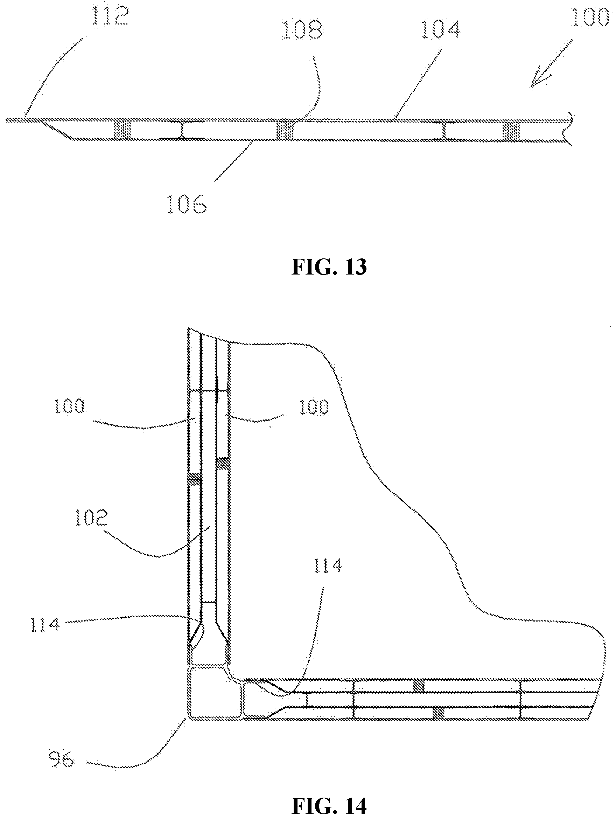

The cargo container 70 may be constructed as shown in FIGS. 10 through 14. A first internal structure of a container is illustrated in FIG. 10. This structure may include four columns 96 and eight spines 98 fixed together by corner attachments 74 as illustrated in FIG. 10 to form a right parallelepiped. Panels 100 may then be assembled with longerons 102 to form a top, a bottom and sides of the cargo container 70. A representative panel 100 is illustrated in FIG. 13. The panel 100 may be formed of lightweight material. In this embodiment, the panel 100 may be defined by two thin sheets 103, 106 separated by honeycomb or filler foam material 108. Inner longerons 110 may also be placed between the sheets 103, 106 and attached thereto. About the periphery of each of the panels 100, the sheets 104, 106 may come together to form an attachment flange 112. Each of the panels 100 may be made of composite material or a mixture of aluminum sheets 104, 106 and formed honeycomb 108.

FIG. 13 illustrates the sides, top and bottom of the completed cargo container 70 in association with the structure defined by the four columns 96 and eight spines 98. Two panels 100 may be associated together with longerons 102 positioned therebetween. The attachment flanges 112 may be fixed to the corner columns 96 and spines 98 which include parallel flanges 114 for that purpose. Alternatively, the corner fittings could be made to be replaceable to account for the wear and tear without having to perform significant work on the container.
Additionally, designed-in wear surfaces may be designed to be replaced periodically.

Where longer containers are contemplated, intermediary columns 96 and spines 98 may additionally be employed. In this way, all panels 100 may be of the same size through appropriate location of the columns 96 with the overall lengths of the containers being approximate multiples of the container illustrated in FIG. 10. Multiple containers of varying lengths may be employed to create an overall payload for an aircraft of a given length. FIG. 4 illustrates such arrangements with a sixty-foot cargo area and containers 70 broken into various multiples of approximately ten-foot lengths.

FIG. 8 illustrates the employment of a first embodiment through the placement of a cargo container 70. A drayage truck 116 is shown aligned with the cargo area of the aircraft.
In this case, the rear fuselage 48 is defined by doors which extend in an aerodynamic form and can also fully open to fully expose the interior of the fairing for insertion or removal of the cargo container 70. This container 70 may be, as illustrated in FIG. 4, one single container or a preassembled group of containers 70. Winches and other mechanisms may be employed to assist the repositioning of the container or containers 70 either in the aircraft or on the truck 116. Alternatively, the forward fuselage 40 may be pivoted out of the way as illustrated in FIG. 9 and the containers 70 may be loaded from or unloaded to the truck 116 from the front of the aircraft. The landing gear 52 and/or forward gear 54 may be additionally extendable or retractable or the mounts thereof may be additionally extendable or retractable or the mounts thereof may be able to move up and down to accommodate the level of the bed of a drayage or even flat bed truck 116. Alternatively, smaller containers may be loaded one at a time and assembled when on the spine.

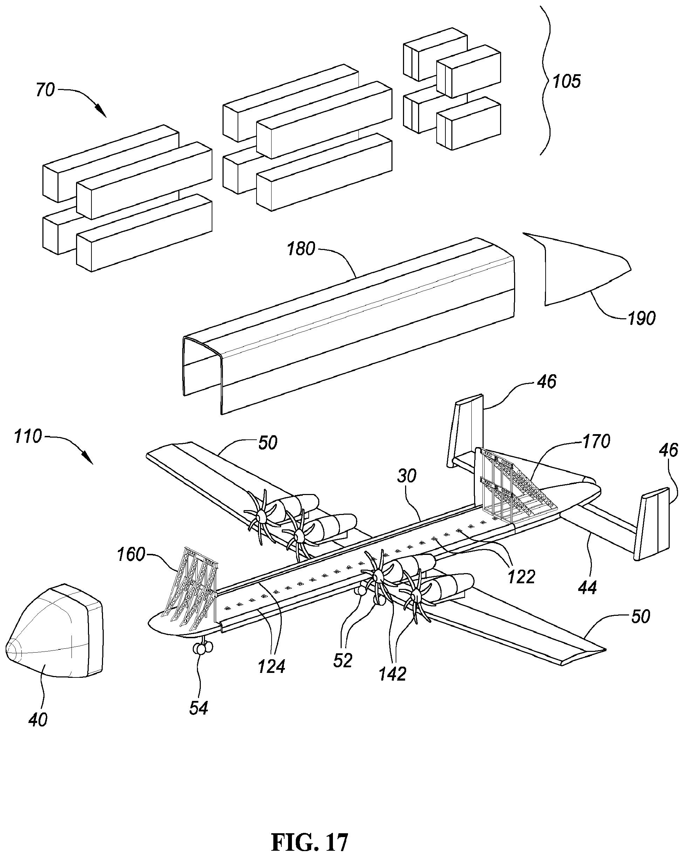

FIG. 17 illustrates another embodiment of a cargo aircraft system. The cargo aircraft system is depicted as comprising an aircraft 110 and a cargo assembly 105. Generally, the cargo aircraft 110 comprises a forward fairing 40, an empennage 42 and a spine structure 30 between the forward fairing 40 and the empennage 42. The spine structure 30 comprises guide flanges 124 which run longitudinally along each side of the spine structure 30 to guide the cargo assembly 105 in place during loading on the spine structure 30. A plurality of mounts 122 is disposed at various intervals along the spine structure 30 to structurally engage the cargo assembly 105 at various attachment points onto the spine structure 30.

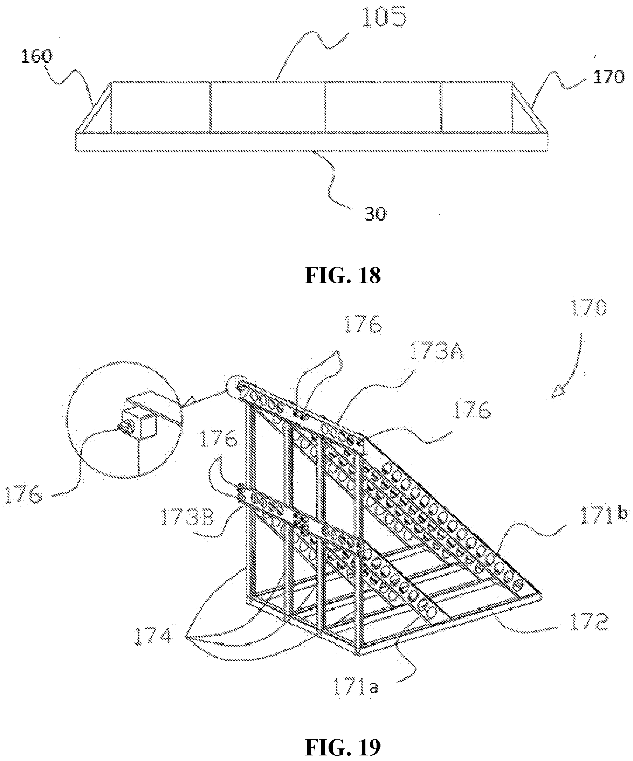

Wings 50 may be structurally associated with the spine structure 30. Wings 50 may optionally contain fuel tanks (not shown). Landing gear 52 may be provided under the wings 50 and spine structure 30 and a forward gear 54 may be provided under the spine structure 30 or the forward fairing 40. Alternatively, the landing gear may have their own fairings or pods or conformal pods. Engines 142 are shown in the embodiment of FIG. 17 to be mounted on top of the wings 50. It is understood that the engines 142 may also be mounted under the wings 50 and/or on the spine structure 30 or even over the wings 50. Aerodynamic fairings 180, 190 may be optionally provided to enclose the cargo assembly 105 and the pair of load transfer structures 160, 170. In one embodiment, the pair of load transfer structures 160, 170 may be configured as trusses as depicted in FIGS. 17, 19, 25, 26, 27, 28, 29, and 30. The aerodynamic fairings 180, 190 may be optionally provided to enclose the cargo assembly 105 and the pair of load transfer structures 160, 170. The aerodynamic fairings 180, 190 may be made of a composite lightweight material such as post buckled structures and the primary function of the aerodynamic function may be to reduce drag. In one embodiment, the aerodynamic fairings do not provide substantial, if any, support or rigidity to the aircraft in flight. The load transfer structure 170 described in relation to FIG. 19 may be used for either the front or rear supports 160, 170 as described herein.

Load transfer structures 160, 170 may further engage the cargo assembly 105 to the spine structure 30. Load transfer structures 160, 170 may provide additional structural support to the aircraft to withstand bending moments in flight and provide further support and integration of the cargo assembly 105 onto the spine structure 30. Depending on the direction from which the cargo assembly is loaded onto the spine, either one or both of the forward load transfer structure 160 and the aft load transfer structure 170 may be removably attached to the spine structure 30. Thus, for example, in an embodiment where the cargo assembly is loaded through the aft of the aircraft 110, the aft load transfer structure 170 may be removed from the spine structure 30 prior to loading. Alternately, the entry point may be from the front of the aircraft and the forward fairing would pivot open.

FIG. 18 depicts the points of attachments at which the bending moments may be transferred between the cargo assembly 105 and the spine structure 30. It is understood that while FIG. 18 depicts cargo assembly comprising only a single layer of modular container units, cargo assemblies comprising multiple layers modular container or frame units may also be accommodated by modifying the load transfer structures 160, 170 to include additional points of attachment for each layer. FIG. 18 depicts the containers being structurally connected together, with the spine structure 30 and the load transfer structures 160, 170.

FIG. 19 depicts an exemplary aft load transfer structure 170 that may be used to couple cargo assemblies comprising two layers of modular containers or frame units. The aft load transfer structure 170 may comprise horizontal support members 172 fixed to vertical support members 174 at a 90-degree angle. Two sets of diagonal support members 171 A, 171B may couple the horizontal support members 172 and the vertical support members 174 at different points corresponding roughly to the heights of the first and second layers of the cargo assembly 105. Stabilizer bars 173 A, 173B may optionally be provided along the points where the diagonal support members 171 A, 171B are joined to the vertical support members 174. Mounts 176 may be provided along the stabilizer bars 173 A, 173B to securely fasten the cargo assembly to the aft load transfer structure 170. The forward load transfer structure 160 is may be constructed in a manner similar to the aft load transfer structure 170, with the exception that the forward load transfer structure 160 may be permanently affixed to the spine structure 30, whereas the aft load transfer structure 170 may be a removable or pivotable structure in embodiments where the cargo assembly 105 is loaded through the empennage 42 of the aircraft 110.

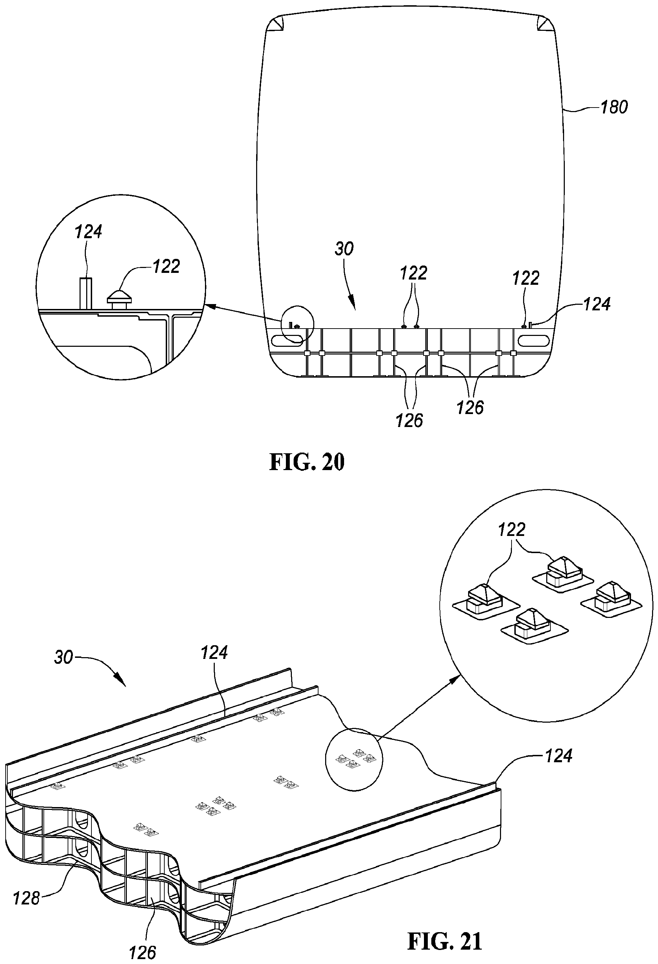

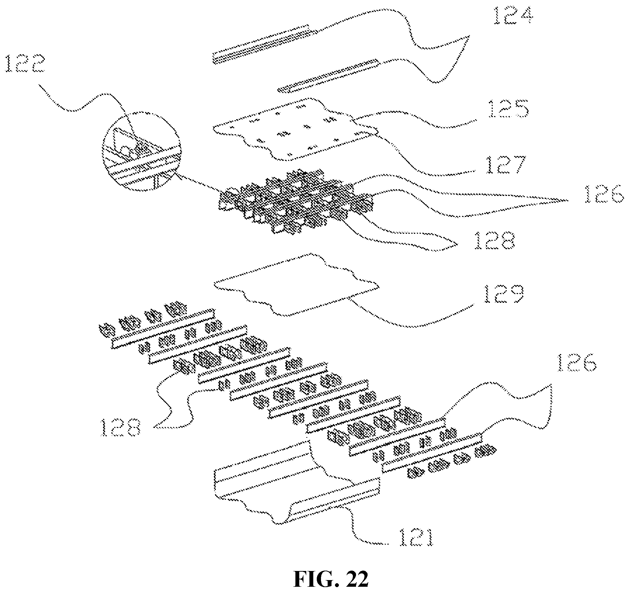

FIGS. 20-22 show the structure of the spine structure 30 of the cargo aircraft 110 in greater detail. The structural support of the spine structure 30 comprises layers of
interconnected bulkheads 128 and spars 126. The bulkheads 128 and spars 126 may be interconnected by means known in the art such as, for example, by bolting, riveting, bonding, welding, friction stir welding, or bonding. While the spine structure 30 depicted in FIGS. 20-22 show two layers of interconnected bulkheads 128 and spars 126, it is understood that a lighter weight spine structure 30 comprising only a single layer of interconnected bulkheads 128 and spars 126 may be provided for lighter cargo assembly weight loads. Alternatively, additional layers of interconnected bulkheads 128 and spars 126 may be provided to accommodate cargo assemblies having higher weight loads.

There are many advantages of the aircraft as described herein. Among these advantages is that the landing gear may be lighter and it provides relatively easy access to the spine structure. One challenge, however, is that because the cargo assembly 105 are attached to the spine structure 30, it may experience a significant tension, as illustrated in FIG. 23. The tension experienced by the cargo assembly 105 results from the payload weight and the wing lift during flight. To help reduce the tension loads that the containers may experience, various embodiments apply a preload to the containers to reduce the tension that they would experience in flight.

Aircrafts are also prone to flutter, an oscillation caused by interaction of aerodynamic forces, structural elasticity and inertial effects. Flutter in aircraft causes the wings and/or stabilizers to oscillate and when the airspeed increases, the energy added in each oscillation also increases. The variable stiffness that is provided by the application of a preload to the container assembly, as described herein, also help mitigate or even prevent the aircraft from experiencing flutter, thereby providing improved flutter control. This preloading may also apply to an upper spine design and the container assembly by providing an active flutter control system.

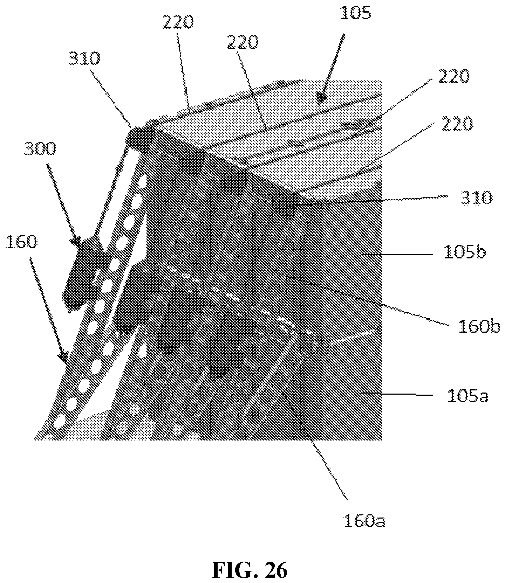

In one embodiment, the aircraft comprises a pre-load system that comprises a first load transfer structure 160 coupled to a first portion 107 of the spine structure 30 and a second load transfer structure 170 removably coupled to a second portion 109 of the spine structure 30. The pre-load system further comprises a linking structure 220 coupled to the first and second load transfer structures 160, 170. As understood herein, the terms"couple,""coupled," and "coupling" is understood to include both a direct attachment and an indirect attachment via an intermediate structure. In the embodiment depicted in FIGS. 26 and 27, the linking structure 220 is coupled to the first load transfer structure 160 via a guide 310 and tensioning mechanism 300 and to the second load transfer structure 170 via a retaining member 400. The variable tensioning provided by the pre-load system is that it can be used by itself to account for variable loaded containers or as part of an active flutter system to reduce dangerous harmonics.

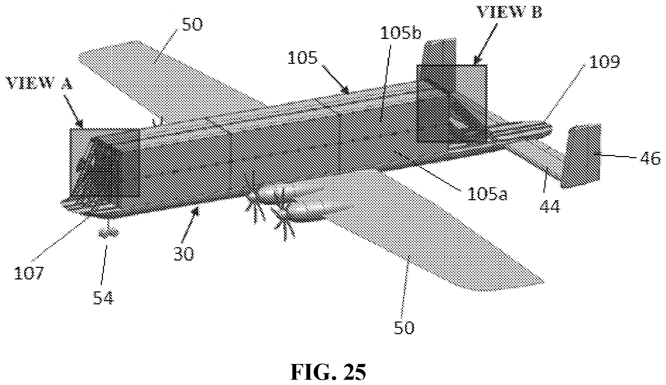

FIGS. 25-27 illustrate the pre-load system as it is provided on a cargo aircraft.
The forward and aft fairings 131, 133 are removed from the aircraft to reveal the first and second load transfer structures 160, 170. As shown in greater detail in FIG. 26 the first load transfer structure 160 comprises a lower support 160a and an upper support 160b. The lower support 160a may be coupled to the spine structure 30 on one end and the lower row of cargo containers 105a and optionally and additionally the upper rows of the cargo containers 105b on the other end. The upper support 160b may be coupled directly to either the spine structure 30 or the lower support 160a (shown) on one end and to the upper row of cargo containers 105b on the other end. A tensioning mechanism 300 is depicted as being coupled to the upper support 160b. It is understood, however, that the tensioning mechanism 300 can be attached to lower support 160a or any other location on the load transfer structure 160. It is also understood that the tensioning mechanism 300 can instead be attached to any location on the second load transfer structure 170. A guide 310 is provided at the top of the upper support 160b to guide the linking structure 220 over and down the first support 160 and terminating at the tensioning mechanism 300. In one embodiment, the guide 310 is a pulley block or any other structure that allows for the movement of the linking structure 220 without significant friction. Pulleys may also be used to locate the tensioning mechanism 300 on the spine or in the spine itself.

In one embodiment, the linking structure 220 is a cable. The cable is preferably made from one or a combination of steel, metal or combinations of metal, fiber and composite materials. In one aspect of the embodiment, the cable is not elastic or resilient. In another aspect of the embodiment, the cable is elastic or resilient.

The tensioning mechanism 300 is configured to apply a variable amount of preload or compressive force to the cargo containers 105 as the tensioning mechanism 300 increases the tension on the linking structure 220. In one embodiment, the tensioning mechanism is configured similarly as a barrel adjuster, wherein the tensioning mechanism 300 is in threaded engagement with the linking structure 220 such that turning the barrel adjuster in one direction increases the tension of the linking structure 220.

The tensioning mechanism 300 may further comprise sensors that allow the tensioning mechanism 300 to dynamically increase or reduce the tension during flight. The amount of applied tension is correlated to the weight of the cargo containers or payload. Thus, the heavier the payload, the greater the tension. In another embodiment, the tension on the cables may be applied in relation to weather conditions.

The linking structure 220 is coupled at one end to the first load transfer structure 160 via the tensioning mechanism 300 and at the other end to the second load transfer structure 170 via a mating pair 500. FIG. 27 depicts the second load transfer structure 170 of the aircraft. Similar to the first load transfer structure 160, the second load transfer structure 170 also comprises one or a plurality of lower supports 170a that is coupled to the spine structure 30 on one end and to the lower row of cargo containers 105a and optionally and additionally the upper rows of the cargo containers 105b on the other end. One or more upper supports 170b may be directly coupled to either the spine structure 30 (shown) or the lower support 170a on one end and to the upper row of cargo containers 105b on the other end.

The linking structure 220 further comprises a retaining member 400 which comprises one of a mating pair 500a that is configured to removably couple with the other one of the mating pair 500b provided on the linking structure 220. The mating pair 500 coupling the end of the linking structure 220 to the retaining member 400 is similar to that depicted in FIG.
31. In one embodiment, the mating pair 500 may comprise a male portion and a corresponding female portion. The retaining member 400 may be a bar or other rigid structure or even a strap that extends across and is coupled to the tops of the plurality of upper supports 170b.

Before loading and unloading of the cargo containers 105, the linking structure will need to be decoupled from the retaining member 400 and one of the first or second load transfer structures 160, 170 would need to be removed from the spine structure 30. In order to remove the first or second structures 160, 170, the tension on the linking structure 220 would need to be reduced sufficiently to allow the release of the linking structure 220 from engagement with the retaining member 400 via the mating pair 500.

FIG. 28 illustrates an alternate embodiment of the aircraft having a forward fairing 131, an aerodynamic fairing 132 surrounding the cargo bay, and an aft fairing 133a, 133b. In this embodiment, the aft fairing 133a, 133b is pivotally movable relative to the spine structure 30 and each houses a portion of the second load transfer structure 170. In this manner, both the aft fairing 133a, 133b and the second load transfer structure 170 may be pivoted out of the way to permit the cargo containers to be loaded onto the spine structure 30. It is understood, however, that the aft fairings 133a, 133b may also swing as one piece left or right or pivot up. FIG. 28 further depicts the structure of the second load transfer structure 170 having horizontal supports 147 that can be removably coupled to the spine structure 30 and vertical supports 149 coupling the horizontal supports 147 to the retaining member 400.

In another embodiment, as illustrated in FIGS. 29-31, a retaining frame 600 that is separate from the second load transfer structure 170 may be provided to couple the linking structure 220. The retaining frame 600 comprises one or a plurality mating pairs configured to couple to the end of the linking structure 220. In contrast to the embodiment depicted in FIGS. 25-27, the linking structure 220 can remain on and need not be removed from the retaining frame 600. The second load transfer structure 170 may be removably attached to the retaining frame 600 to provide the structural strength to support the tension of the linking structure 220. In one embodiment, the retaining frame 600 comprises vertical support members 600a that may be removably coupled to the spine structure 30 and a horizontal support member 600b coupling the vertical support members 600a. One or both of the vertical support members 600a and horizontal support member 600b may be removably coupled to the second load transfer structure 170. The distance between the vertical support members 600a may preferably be larger than the width of the cargo assembly 105 and the height of the horizontal support member 600b may be larger than the total height of the cargo assembly 105 that is coupled to the spine structure 30.

In another embodiment, the aircraft system may have an upper wing and upper spine configuration in which the tensioning wires are on the bottom and may be used to provide flutter control during flight.

In another embodiment, the aircraft system, whether using an upper spine or a lower spine, has a tensioning system on the sides of the containers to provide flutter control during flight. The embodiment of the aircraft having the upper spine configuration is described in U.S. Pat. No. 7,261,257.

In an alternative embodiment, the linking structure 220 may be permanently or removably affixed to the retaining member 400 coupled to a first or second load transfer structure 160, 170 or to a retaining frame 600. In this alternative embodiment, tension on the linking structure 220 may be released or reduced significantly such that there is very little to no tension on the linking mechanism 220 and the linking mechanism 220 may be moved away from the rear of the spine 105 to provide a clear and unobstructed pathway for loading or unloading of the cargo assembly 105. There may also be springs or other mechanisms to maintain the cables above the containers when not tensioned to allow removal or entry of the container or container assembly.

In all of the embodiments described herein, it is understood that the linking mechanism 220 may be provided as a single unit or as a plurality of linking mechanisms 220 and corresponding guides 310 and tensioning mechanisms 300. Where there is a plurality of linking mechanisms 220 spanning the length of the cargo assembly 105, the amount of tension applied to the linking mechanism 220 may be the same or each one of the plurality of linking mechanisms 220 may apply a different amount of tension, depending on the weight and/or weight distribution of the containers 70 in the cargo assembly 105.

Systems and Methods for Mating Aircraft with Items to Be Transported

Embodiments of the technology disclosed herein are also directed toward improved systems and methods for mating aircraft with items to be transported by the aircraft. More particularly, various embodiments of the technology disclosed herein relate to aligning fittings on the aircraft with corresponding fittings on the items to be transported.

Transporting cargo over long distances by aircraft requires significant amounts of aircraft fuel, resulting in significant fuel costs. To achieve greater fuel efficiency, large aircraft are being deployed to transport large loads with the loads' structure sharing aircraft loads. For example, a single aircraft having a 120' spine may transport an assembly of 12' x 40' containers connected in series and laterally and having an overall length of 120'. But due to thermal expansion and contraction, if the temperatures of the spine and the assembly differ significantly prior to mating, it may be difficult or impossible to attach the assembly to the aircraft. That is, due to these thermal effects, fittings on the spine of the aircraft may not align with fittings on the container assembly, such that mating the container assembly with the spine of the aircraft becomes difficult if not impossible.

For example, assume the aircraft is flying at an altitude of 25,000 feet where the ambient temperature is -30°F, and the container assembly is resting in the sun on a hot desert floor at a temperature of 150°F. Further assume that the aircraft warms by 50°F during a combat landing. In this scenario, the temperature difference between the aircraft spine and the container assembly is then 130°F.

Further assume the spine and container assembly are fabricated from aluminum 6061, a common aircraft material. The thermal expansion coefficient of aluminum 6061 is 13.5 x 106 inch/inch/°F for temperatures between 68°F and 392°F, and 12.1 x 106 inch/inch/°F for temperatures between 68°F and -58°F. Using an average thermal expansion coefficient of 13.1 x 106 inch/inch/°F, the linear expansion for a 120' structure is 2.5". Assuming the best case, where the spine and container assembly are first attached near their midpoints, the fittings near the endpoints may mismatch by 1.25". Similar mismatches may occur when the spine and container assembly are fabricated from other types of materials, such as other metals, composites, and the like.

One possible solution is to provide a system for the spine fittings to slide along the length of the spine, along with any electrical and data connections. An air-operated or hydraulic system may be used to slide the fittings to the correct locations. The fittings in the spine could then be mechanically locked to the container assembly as they are tightened in the corresponding container fittings. One disadvantage of this mechanism is that it adds to the overall weight of the system. Another disadvantage of this solution is that it requires increased maintenance and replacement of the additional components due to wear. A further disadvantage of this type of mechanically adjusted system is that the spine and container structures at some point will reach the same temperature such that mating the structures at different temperatures will involve some further movement until the structures come to the same relative temperature, further complicating the mechanism. One advantage of this solution is that it accommodates spines and containers fabricated from materials having very different thermal coefficients of expansion.

A second solution is to land the aircraft, and then simply wait for the temperature of the spine to rise to the temperature of the container assembly. However, this approach may consume a great deal of time, which may be unacceptable for some operational conditions such as military requirements for spending the shortest amount of time on the ground in a hostile environment.

A third solution is to heat the spine so that its temperature, and consequently its length, approximates that of the container assembly by the time the aircraft reaches the container assembly. For example, an electric-thermal heating system similar to current aircraft de-icing systems may be used to heat the spine of the aircraft. This solution is described in detail below.

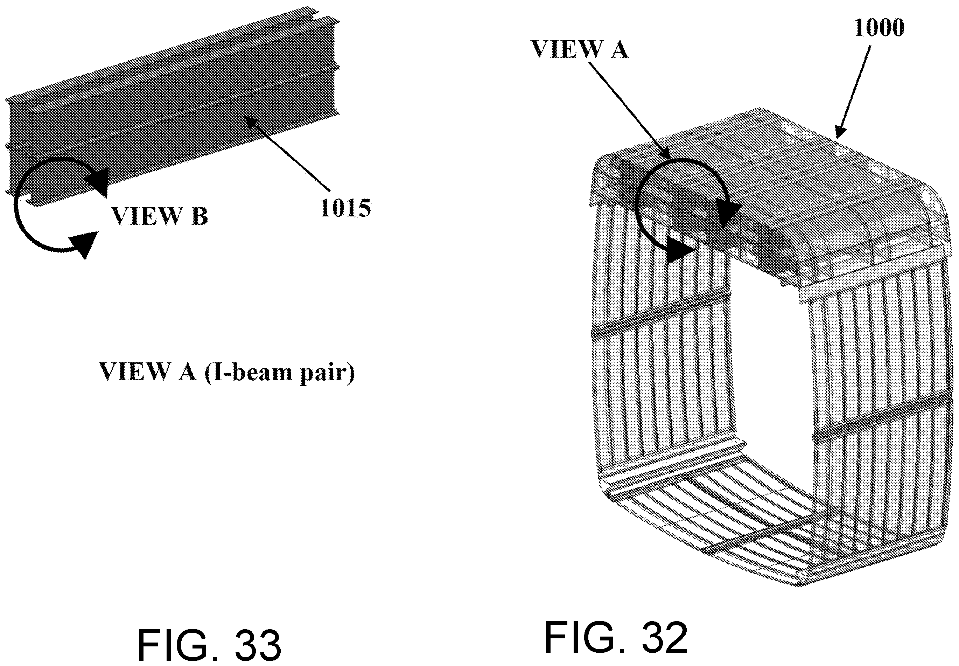

FIG. 32 shows a trimetric view of an aircraft section including a section of an aircraft spine 1000 disposed alongships in accordance with the disclosed technology. The aircraft spine 1000 may be mechanically coupled with a propulsion system (not shown) of the aircraft. In the described embodiments, the spine 1000 may be fabricated of aluminum. However, in other embodiments, the spine 1000 may be fabricated of other materials, such as other metals, composites, and the like. Referring to FIG. 32, the spine 1000 may include multiple pairs of I- beams running alongships. FIG. 33 shows a View A of FIG. 32 illustrating one of the pairs of the I-beams 1015.

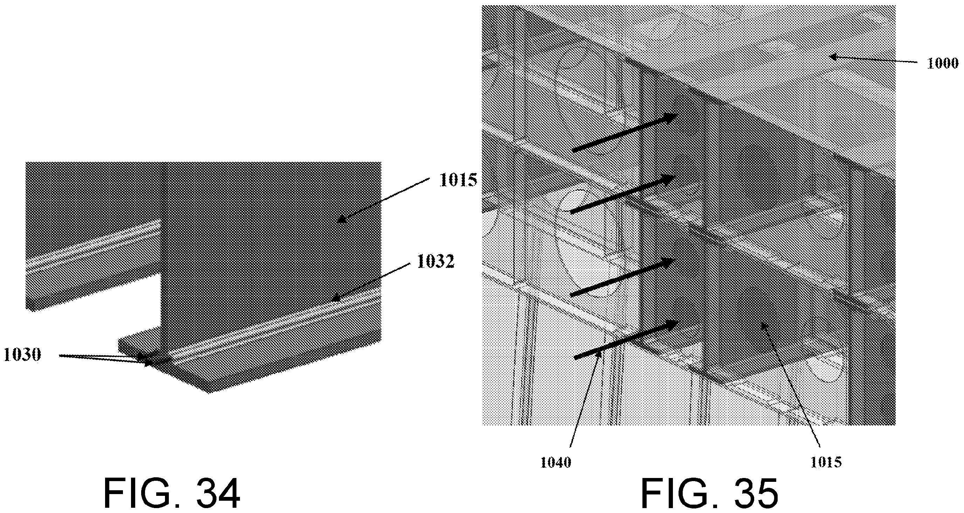

FIG. 34 shows a View B of FIG. 33 illustrating a lower section of one of the I- beams 1015. Referring to FIG. 34, one or more heating wires 1030 may be disposed along the length of the I-beam 1015, that is, alongships. For example, each I-beam 1015 may have four heating wires disposed at the four inside corners of the I-beam. It should be understood that I- beams are just one example, and that other structures may be used, for example such as C- sections, tubes, or other common aircraft-type configurations. In some embodiments, the heating wires 1030 may be disposed within a sheath 1032 to hold the heating wires 1030 in place. In other embodiments, other heating elements may be employed, either instead of, or in addition to, the heating wires 1030, for example such as heating blankets, heating meshes, additives, and the like. In some embodiments, one or more heat spreaders thermally coupled to the spine 1000 may be employed to spread the heat, for example such as thin metal sheets. The aircraft may include a thermal system that includes these heating elements, as well as an electrical source (not shown) configured to provide electricity to the heating elements.

In other embodiments, the spine may be heated in other ways. For example, in some embodiments, the spine may be heated by a hot fluid system configured to pass hot fluids through one or more passages in the spine 1000. The fluids may include liquids, gases, or combinations thereof. In some embodiments, the hot fluid may be provided through a duct from the propulsion system of the aircraft. For example, the duct may provide hot bleed engine air from an engine of the aircraft similar to the way some current passenger aircraft heat their cabin spaces. Such embodiments may include a condensation elimination system to reduce or eliminate any condensation that may occur.

In some embodiments, the passages in the spine 1000 may be formed between the I-beams 1015 in a pair of I-beams arranged in parallel. FIG. 35 shows a section of the aircraft spine 1000 where pairs of I-beams 1015 form passages alongships the aircraft. Referring to FIG. 35, the pairs of I-beams 1015 form passages through which hot fluids, shown generally at 1040, may be passed.

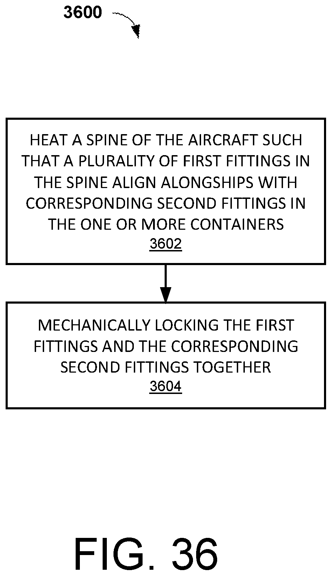

FIG. 36 shows a process 3600 for transporting one or more containers on aircraft in accordance with embodiments of the present invention. Referring to FIG. 36, the process 3600 may include heating the spine 1000 of the aircraft such that a plurality of first fittings in the spine align alongships with corresponding second fittings in the one or more containers, at 3602. In some embodiments, the aircraft may include a receiver configured to receive a signal representing a temperature of the one or more containers. In such embodiments, the aircraft spine 1000 may be heated to approximately the same temperature as the containers. For example, the aircraft spine 1000 may be heated prior to landing so the spine may immediately be engaged with the containers.

The process 3600 may further include mechanically locking the first fittings and the corresponding second fittings together subsequent to heating the spine of the aircraft, at 3604. Mechanically locking the fittings may include twisting the first fittings.

The containers may be configured to contain cargo, personnel, or combinations thereof. Furthermore, the disclosed embodiments are not limited to transporting assemblies of multiple containers. For example, the disclosed technology may be used to transport a single container.

In some embodiments, the aircraft may be configured to transport items other than containers. For example, the aircraft may be configured to transport or more fuselage sections, and the like. In such embodiments, the items may include suitable fittings to engage with the fittings disposed along the spine of the aircraft.

Another challenge presented when transporting long items by aircraft is that the items may flex while being lifted and attached to the spine of the aircraft. For example, consider an assembly of 12' x 40' containers connected in series and having an overall length of 120'. When the assembly is lifted near the midpoint, the distal ends of the assembly may droop significantly. When the assembly reaches the spine, the fittings near the midpoints of the spine and container assembly may come into contact, while the fittings near the distal ends may be some distance apart. This may be the case even when the spine and container are near the same temperature.

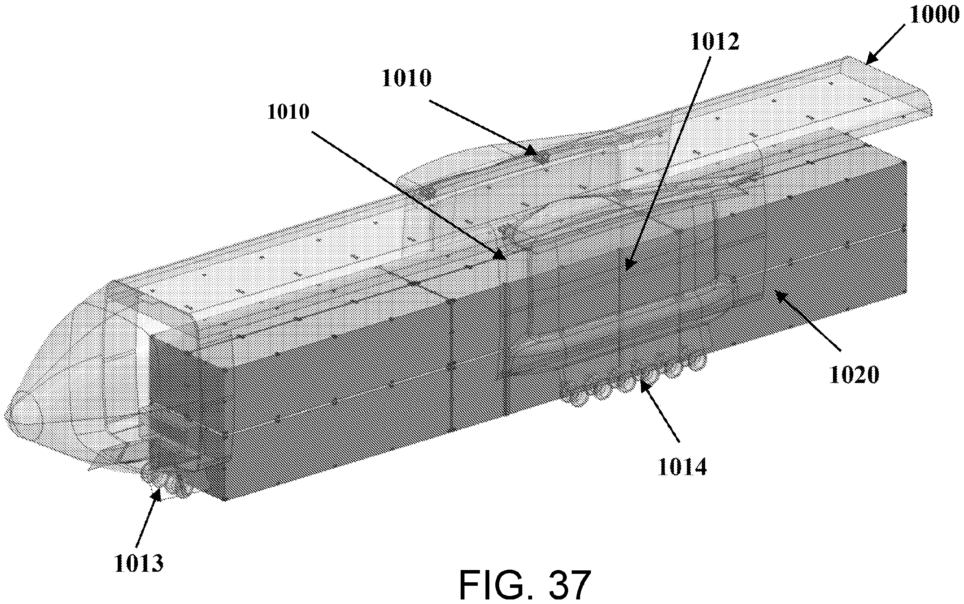

FIG. 37 shows a portion of a large aircraft system according to embodiments of the disclosed technology. Referring to FIG. 37, the aircraft includes landing gear 1013 and 1014 that includes a plurality of wheels. The aircraft may include a wheel drive system (not shown) that may drive the wheels such that the aircraft moves over a container assembly 1020 to be transported by the aircraft. One benefit of this arrangement is that it allows the container assembly 1020 to be assembled on the ground, and without the use of any ground carts. For example, the container assembly may be assembled using existing intermodal forklift-type systems. The forklift-type systems may be operated robotically.

The aircraft may include one or more lifts 1010 configured to lift the container assembly 1020 to contact the spine 1000 of the aircraft. Referring to FIG. 37, the illustrated aircraft system includes a lift disposed near the midpoint of the aircraft, shown generally at 1010. Each lift may be implemented in any manner.

For example, in some embodiments, the lift 1010 may include a grappling mechanism 1012 that includes a plurality of grapples, each configured to mechanically engage one of the fittings in the container assembly. The lift 1010 may include a drive system to raise and lower the grapples, thereby raising and lowering the container assembly 1020. In some embodiments, the grappling mechanisms 1012, grapples, and drives described herein may be implemented in a manner similar to those developed for the port container industry.

The drive system may be implemented in any manner. In some embodiments, the drive system may include one or more winches, each configured to wind a cable connected to one of the grapples. In other embodiments, the drive system may include rigid members such as rods, beams, and the like.

The drive system may be operated by any type of drive. For example, the drive may be implemented as a hydraulic drive, a pneumatic drive, an electro-mechanical drive, and the like.

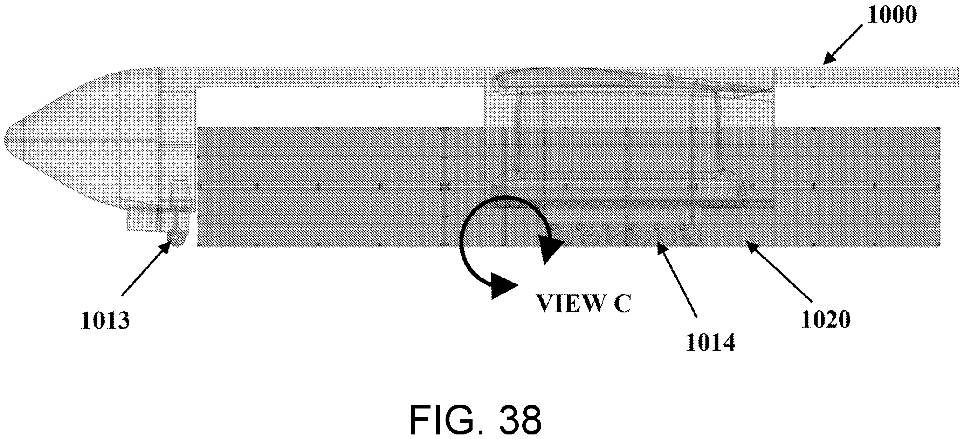

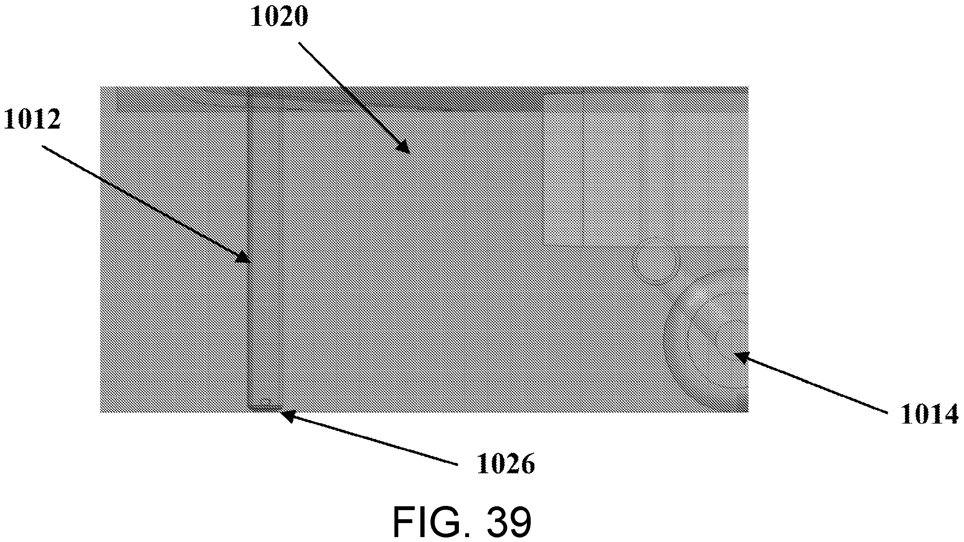

FIG. 38 shows a side view of the aircraft system of FIG. 37. FIG. 39 shows a View C of the aircraft system of FIG. 38. Referring to FIG. 39, the grappling mechanism 1012 may be aligned with, and connected with, fittings 1026 in the container assembly 1020. The lift 1010 is now ready to raise the container assembly 1020.

As the container assembly 1020 is raised, fittings in the medial portion of the container assembly 1020 come into contact with corresponding fittings in the medial portion of the spine 1000. At this point, these fittings may be mechanically locked together, for example by twisting the fittings in the spine 1000.

However, the container assembly 1020 may flex such that the distal portions of the container assembly 1020 droop, and consequently the fittings in the distal portions of the container assembly 1020 are not brought into contact with corresponding fittings in the distal portions of the spine 1000. Additional lifts 1010 may be disposed at distal portions of the spine to lift the distal portions of the container assembly 1020 such that fittings in the distal portions of the container assembly 1020 are brought into contact with corresponding fittings in the distal portions of the spine 1000. At this point, these fittings may be mechanically locked together, thereby securing the container assembly 1020 to the spine 1000 of the aircraft.

In the described embodiments, the medial portion of the container assembly 1020 is lifted and connected to the spine first, and then the distal portions of the container assembly 1020 are lifted and connected to the spine. However, in other embodiments, other portions of the container assembly 1020 may be lifted first. For example, one end of the container assembly 1020 may be lifted and connected to the spine first, followed by other portions. In this example, corresponding fittings may be mechanically locked together as they are brought into contact, in a manner similar to a zipper being closed.

In some cases, the container assembly 1020 may flex horizontally, that is, athwartships, such that fittings in the container assembly 1020 are not aligned with
corresponding fittings in the spine 1000 of the aircraft. In some embodiments, the aircraft system may include horizontal drive mechanisms to drive the container assembly 1020 into alignment.

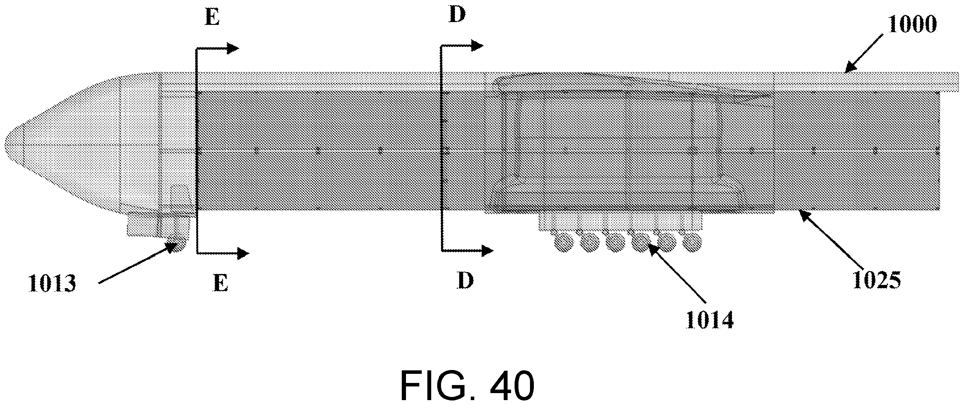

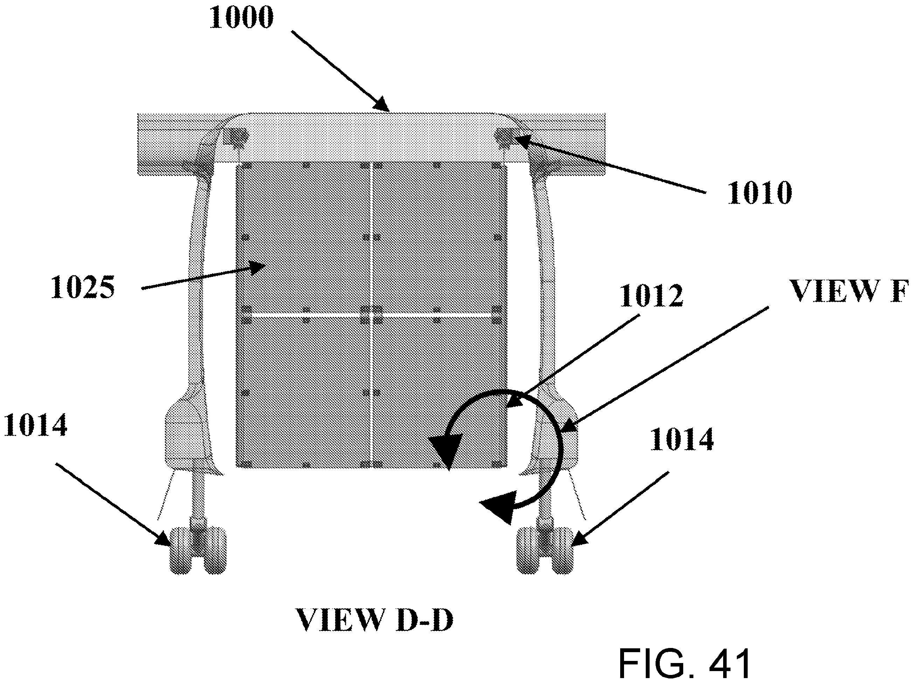

FIG. 40 shows another side view of the aircraft system. FIG. 41 shows a View D- D of the aircraft system of FIG. 40. In FIG. 41 it can be seen that the container assembly 1020 is a 2x2 arrangement of the containers.

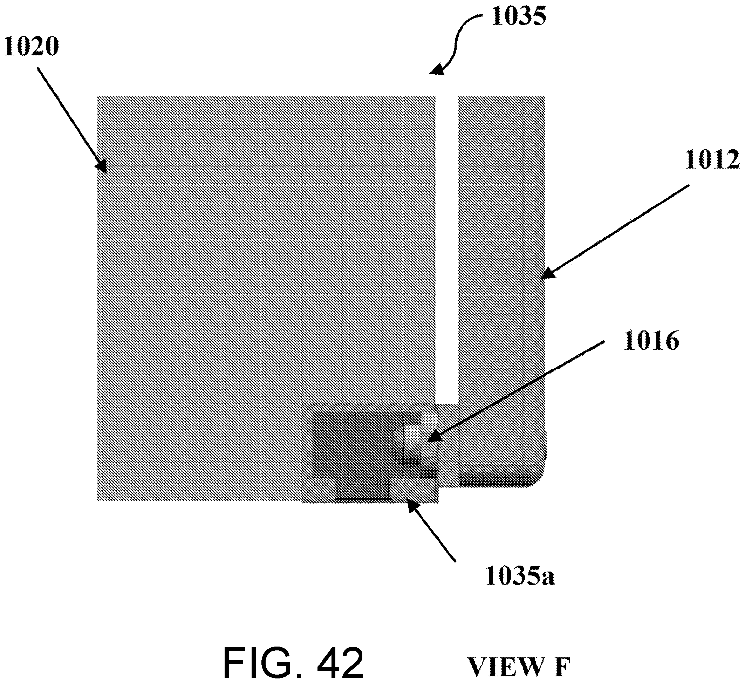

FIG. 42 shows a View F illustrating further detail of the aircraft system of FIG. 41. Referring to FIG. 42, the aircraft system may include one or more horizontal drive mechanisms 1035. Each of the horizontal drive mechanisms 1035 may be implemented, for example, as a compact hydraulic system or an electro-mechanical system. In some embodiments, one or more of the horizontal drive mechanisms 1035 may be implemented on a track mounted on the spine 1000 such that the mechanisms 1035 made travel along the spine to apply horizontal forces to the container assembly 1020 at different points so as to align the container assembly fittings with the spine fittings.

In some embodiments, the horizontal drive mechanisms 1035 may be integrated with the lifts 1010 of the aircraft system. FIG. 42 shows a grapple or fitting 1016 of the grappling mechanism 1012 mechanically engaged with a lower comer fitting 1035a of a lower right container in a container assembly 1020. However, in other embodiments, the fitting 1016 may be engaged with other fittings 1035a of other containers. For example, the fitting 1016 may be engaged with an upper fitting of an upper container in the container assembly 1020 in order to exert greater leverage to drive the container assembly 1020 horizontally.

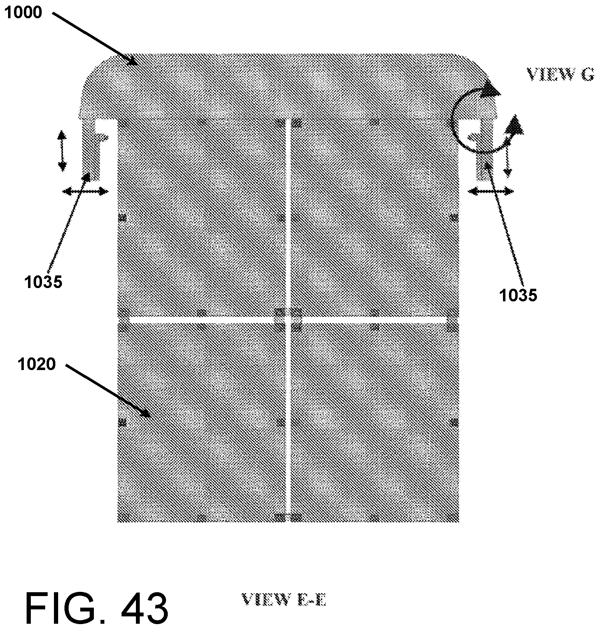

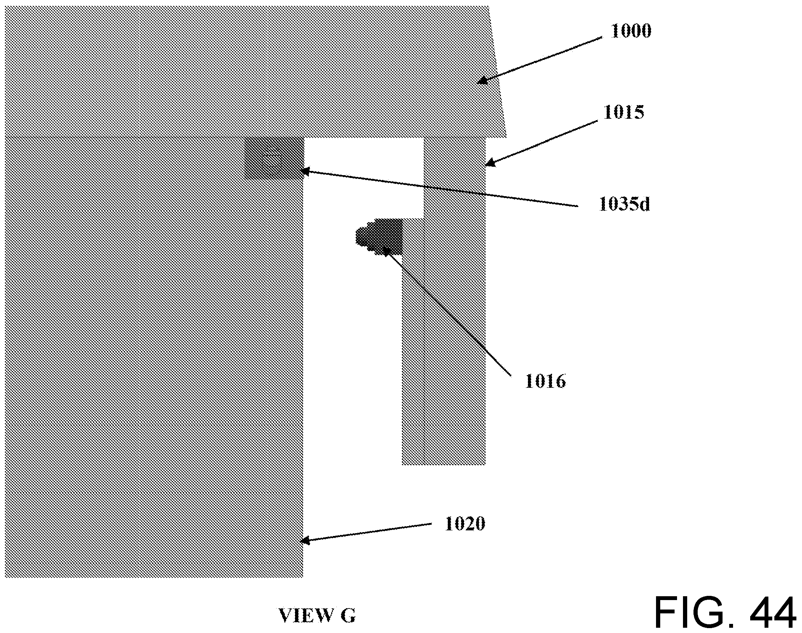

FIG. 43 shows a View E-E of the aircraft system of FIG. 40. Referring to FIG. 43, the container assembly 1020 has been attached to the spine 1000 of the aircraft system, and the horizontal drive mechanisms 1035 have been retracted. FIG. 44 shows a View G illustrating further detail of the aircraft system of FIG. 43. In particular, an upper right corner fitting 1035d of the container assembly 1020 is shown.

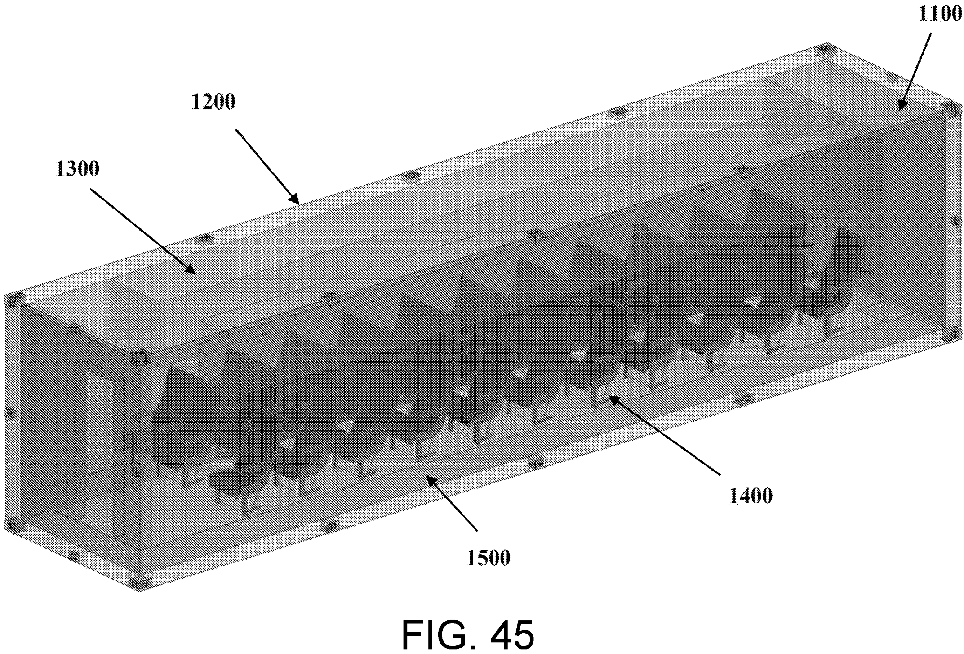

In some embodiments, one or more the containers may be configured to transport cargo. In some embodiments, one or more of the containers may be configured to transport personnel. FIG. 45 illustrates a 40' container configured to transport personnel. The container may include an oxygen and pressurization system 1100, overhead storage bins 1300, and seats 1400. The floor 1500 of the container may be configured to meet safety requirements such as federal aviation administration (FAA) mandated crash load requirements. The maximum payload limit of the aircraft system may be reduced when transporting personnel rather than cargo only. The container may connect to the electrical and data systems of the aircraft, as described elsewhere herein.

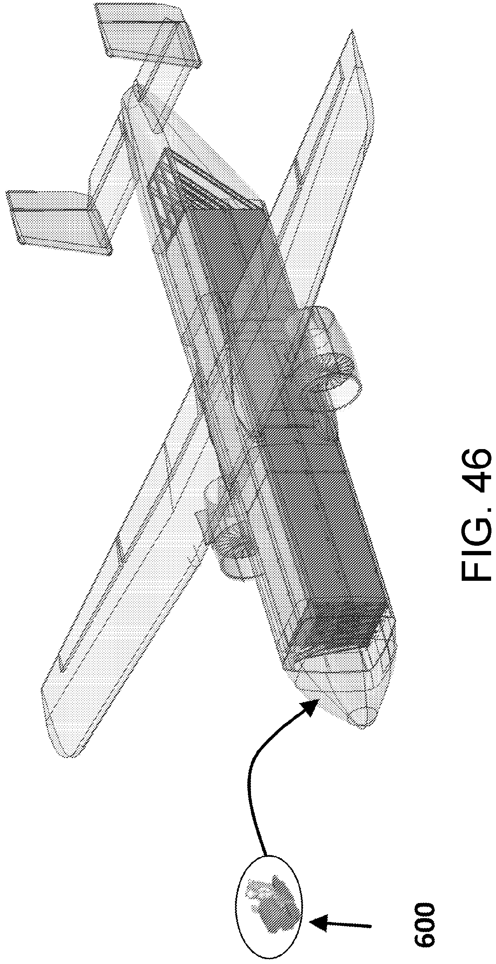

In some cases, the personnel container may be transported by a drone aircraft, for example in a military emergency or the like. In other cases, the aircraft may be piloted, for example for specific military missions. In such embodiments, a smaller version of the personnel container of FIG. 45 may be provided for the pilot. Alternatively, a self-contained removable module may be provided for the pilot that may or may not be part of the aircraft structural components. FIG. 46 shows an aircraft system with a specialized pilot container 1600. The pilot container 1600 may be a single 5' container, and may be attached to the spine 1000 of the aircraft as described above. The pilot container may include features such as aircraft piloting controls, a climate system, and a pilot seat, which may be configured as an ejection seat.

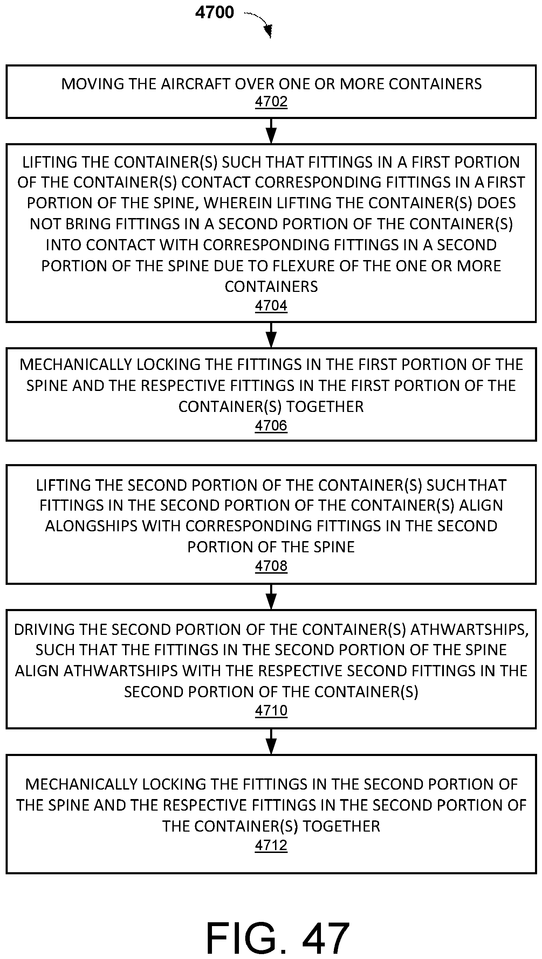

FIG. 47 shows a process 4700 for attaching one or more containers to an aircraft in accordance with embodiments of the present invention. Referring to FIG. 47, the process 4700 may include moving the aircraft over one or more containers, at 4702. For example, a wheel drive system of the aircraft may drive the wheels of the aircraft landing gear to propel the aircraft over the container(s), as described above.

The process 4700 may include lifting the container(s) such that fittings in a first portion of the container(s) contact corresponding fittings in a first portion of the spine, wherein lifting the container(s) does not bring fittings in a second portion of the container(s) into contact with corresponding fittings in a second portion of the spine due to flexure of the one or more contained s), at 4704. For example, a lift 1010 disposed in the medial portion of the spine may be employed to raise the container(s), as described above.

The process 4700 may include mechanically locking the fittings in the first portion of the spine and the respective fittings in the first portion of the container(s) together, at 4706. For example, the fittings in the aircraft spine may be twisted to lock together with the fittings in the contained s).

The process 4700 may include lifting the second portion of the container(s) such that fittings in the second portion of the container(s) align alongships with corresponding fittings in the second portion of the spine, at 4708. For example, a second lift 1010 disposed in a distal portion of the spine may be employed to raise a distal portion of the contained s).

The process 4700 may include driving the second portion of the container(s) athwartships, such that the fittings in the second portion of the spine align athwartships with the respective second fittings in the second portion of the container(s), at 4710. For example, the horizontal drive mechanism described above may be employed to drive the contained s) athwartships into alignment with the spine.

The process 4700 may include mechanically locking the fittings in the second portion of the spine and the respective fittings in the second portion of the container(s) together, at 4712. At this point, the contained s) are securely attached to the aircraft, and the aircraft is ready for takeoff.

The disclosed systems and methods for mating aircraft with containers and other items to be transported by the aircraft feature numerous advantages over conventional systems and methods. In particular, the systems and methods quickly and efficiently align the fittings in the container with the fittings in the spine of the aircraft. This arrangement allows the containers to be quickly loaded and unloaded, which allows the aircraft to spend very little time on the ground. These features make the system not only efficient, but also ideal for use in military combat operations.

The embodiments described above may be employed alone or in combination. For example, the aircraft may heat its spine to approximately the temperature of a container assembly, as described above, prior to employing the lifting and attaching techniques described above.

### Drone-Dedicated Airport

Embodiments of the technology disclosed herein are also directed toward improved airport designs for cargo drones and/or cargo drones having an on-board monitoring pilot. More particularly, various embodiments of the technology disclosed herein relate to unique airport designs that take advantage of various capabilities of the cargo drone and cargo drone container technology described above.

In one embodiment, a drone-dedicated airport as disclosed herein has a single runway for take-off and landing of cargo drones. Optionally, the drone-dedicated airport has an in-ground track used by a tug to pull landed cargo drones to various parking spaces. At the parking spaces, automated carts remove old payload from the landed cargo drones and bring new payload to the landed cargo drones. The landed cargo drones can also be re-fueled while the payload changes occur. Alternatively, the tug can be electrically powered with periodic recharging or can have side electric tracks to continually charge it.

Because the drone-dedicated airport is reserved for moving cargo containers and does not need passenger infrastructure, costs can be greatly reduced. The drone-dedicated airport can take advantage of automation equipment so that no people are directly involved in moving, loading, or unloading cargo containers.

In certain embodiments, fuel use may be reduced by having the cargo drones pulled to locations within the drone-dedicated airport, rather than having the drones use their own engines. For example, the cargo drones may be pulled or pushed along an in-ground track so that the drones do not have to use their own engines to move from one location to another.

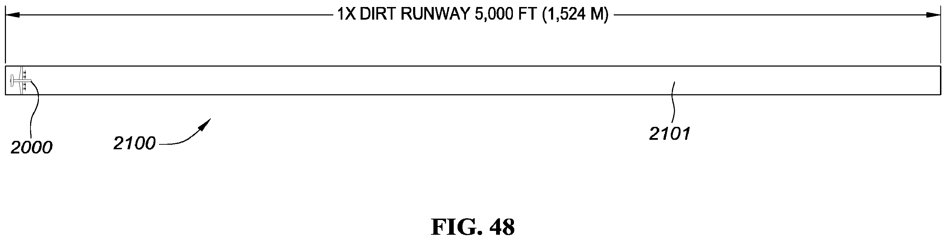

With reference to FIG. 48, there is shown a first embodiment of a drone- dedicated airport 2100 in accordance with the present invention. In this first embodiment, the drone-dedicated airport 2100 is just a dirt or grass or minimally prepared or metal-grated runway 2101 for take-off and landing of cargo drones 2000 up to the size of a C- 130 aircraft or other aircraft capable of landing on such a runway, and has no ground facilities or refueling capabilities. The runway 2101 can be approximately 3,000 to 8,000 feet (914 to 2,438 meters) long, with the airport 2100 itself comprising approximately 16 acres (6.5 hectares). In a particular embodiment, the runway 2101 can be approximately 5,000 feet (1,524 meters) long. The airport uses ground truck systems, such as semi-tractor units that are well known in the art. Alternatively, the airport may use Al-driven truck systems as disclosed in previous art.

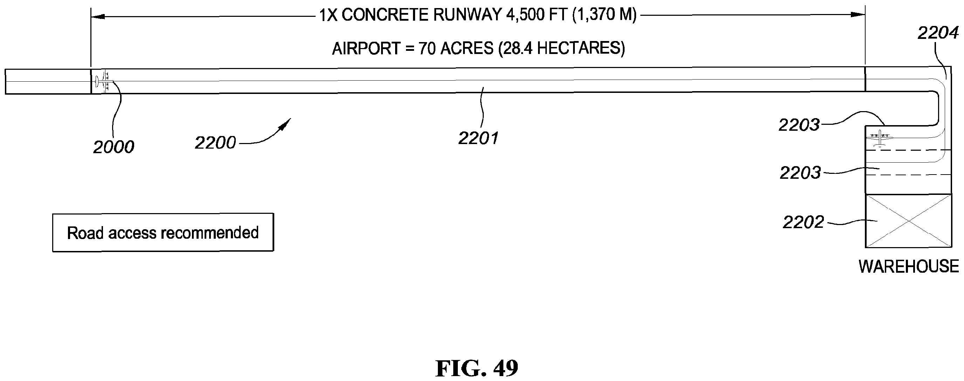

With reference to FIG. 49, there is shown a second embodiment of a drone-dedicated airport 2200 in accordance with the present invention. In this second embodiment, the drone-dedicated airport 2200 comprises a concrete runway 2201 for take-off and landing of cargo drones 2000 up to the size of a C-130 aircraft or any other aircraft capable of landing on such a runway, and has minimal ground facilities and no refueling capabilities. The concrete runway 2201 can be approximately 3,000 to 8,000 feet (914 to 2,438 meters) long, with the airport 2200 itself comprising approximately 70 acres (28.4 hectares). In a particular embodiment, the runway 2201 can be approximately 4,500 feet (1,370 meters) long. The ground facilities can include an air traffic control system (not shown) and a warehouse 2202, along with associated forklifts and truck systems, such as semi-tractor units that are well known in the art. The drone-dedicated airport 2200 can further comprise a plurality of parking spaces 2203 connected to the runway 2201 via a taxiway 2204.

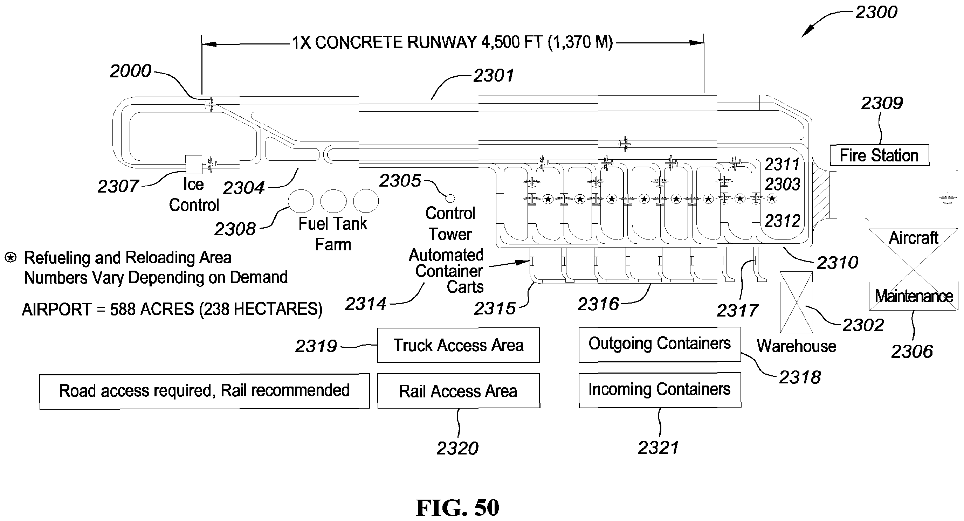

With reference to FIG. 50, there is shown a third embodiment of a drone- dedicated airport 2300 in accordance with the present invention. In this third embodiment, the drone-dedicated airport 2300 comprises a concrete runway 2301 for take-off and landing of cargo drones 2000 up to the size of a C-130 aircraft or similar capable aircraft, and has full ground facilities and full refueling capabilities. The concrete runway 2301 can be approximately 3,000 to 8,000 feet (914 to 2,438 meters) long, with the airport 2300 itself comprising approximately 588 acres (238 hectares). In a particular embodiment, the runway 2301 can be approximately 4,500 feet (1,370 meters) long. The ground facilities can include a warehouse or holding area 2302, an air traffic control tower 2305, an aircraft maintenance/repair facility 2306, an ice control facility 2307, a fuel tank farm 2308, and a fire station 2309. The drone-dedicated airport 2300 can further comprise a plurality of parking spaces 2303 connected to the concrete runway 2301 via a departure taxiway 2304 and an arrival taxiway 2310.

The plurality of parking spaces 2303 can be connected in parallel, with a front end 2311 of each parking space 2303 connected to the departure taxiway 2304 and a back end 2312 of each parking space 2303 connected to the arrival taxi way 2310. The plurality of parking spaces 2303 can be oriented perpendicularly to the length of the concrete runway 2301, as shown in FIG. 50, although other orientations are within the scope of the present invention. Because each end of each parking space 2303 is connected to a taxiway, a landed cargo drone may propel itself or otherwise be pulled by an in-ground track and tug into and out of a parking space 2303 without the landed cargo drone needing to back up or move in reverse.

The plurality of parking spaces 2303 can be part of a refueling and reloading area. In each of the plurality of parking spaces 2303, a landed cargo drone can be automatically or manually re-fueled using fuel from the fuel tank farm 2308. While the landed cargo drone is being re-fueled, payload from the landed cargo drone can be loaded and unloaded using one of a plurality of automated container carts 2314.

Each of the plurality of automated container carts 2314 runs on a cart track 2315 having a main trunk 2316 and a plurality of trunk branches 2317, each connected to the main trunk 2316. The main trunk 2316 leads to the warehouse or holding area 2302, where outgoing containers 2318 can be stored and/or automatically or manually transferred to trucks via a truck access area 2319 or to trains via a rail access area 2320. Incoming containers 2321 from trucks via the truck access area 2319 or from trains via the rail access area 2320 can also be stored in the warehouse or holding area 2302 or transferred directly to the automated container carts 2314. Each of the plurality of trunk branches 2317 can lead to an edge of the arrival taxiway 2310, to the back end 2312 of one of the plurality of parking spaces 2303, or partially or all the way into one of the plurality of parking spaces 2303, to facilitate the loading and unloading of payload from a landed cargo drone.

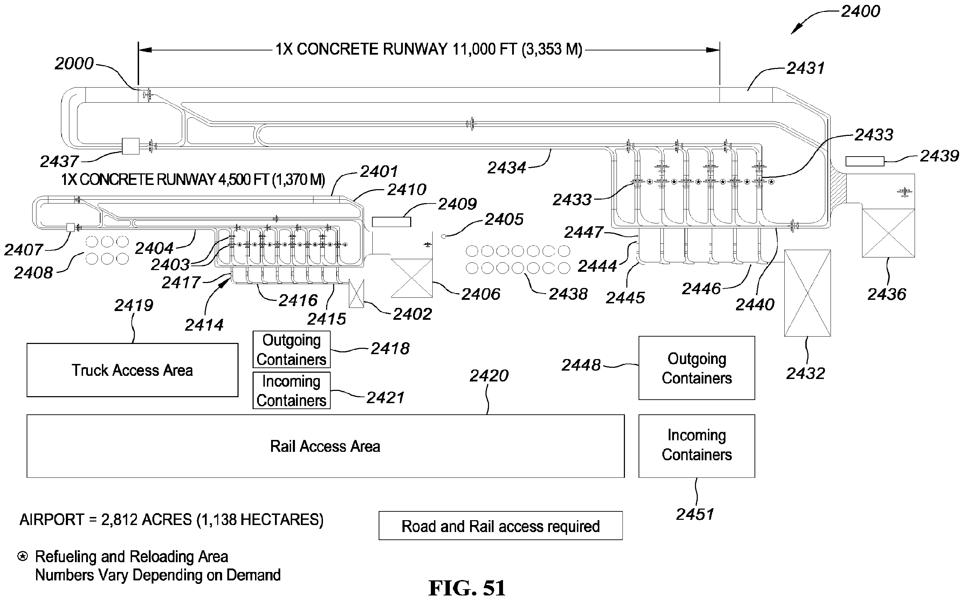

With reference to FIG. 51, there is shown a fourth embodiment of a drone- dedicated airport 2400 in accordance with the present invention. In this fourth embodiment, the drone-dedicated airport 2400 comprises a first concrete runway 2401 for take-off and landing of cargo drones 2000 up to the size of a C-130 aircraft or similar capable aircraft and a second concrete runway 2431 for take-off and landing of any size cargo drone 2000. The drone-dedicated airport 2400 also has full ground facilities, including an air traffic control tower 2405, and full refueling capabilities. The airport 2400 itself comprises approximately 2,812 acres (1,138 hectares).

The first concrete runway 2401 can be approximately 3,000 to 8,000 feet (914 to 2,438 meters) long. In a particular embodiment, the runway 2401 can be approximately 4,500 feet (1,370 meters) long. The ground facilities for the first concrete runway 2401 can include a first warehouse or holding area 2402, a first aircraft maintenance/repair facility 2406, a first ice control facility 2407, a first fuel tank farm 2408, and a first fire station 2409. A plurality of first parking spaces 2403 can be connected to the first concrete runway 2401 via a first departure taxiway 2404 and a first arrival taxiway 2410.

The second concrete runway 2431 can be approximately 11,000 feet (3,353 meters) long. The ground facilities for the second concrete runway 2431 can include a second warehouse or holding area 2432, a second aircraft maintenance/repair facility 2436, a second ice control facility 2437, a second fuel tank farm 2438, and a second fire station 2439. A plurality of second parking spaces 2433 can be connected to the second concrete runway 2431 via a second departure taxi way 2434 and a second arrival taxi way 2440.

The plurality of parking spaces 2403 and 2433 in the fourth embodiment can be connected in parallel, with a front end of each parking space 2403 and 2433 connected to a departure taxi way 2404 or 2434 and a back end of each parking space 2403 and 2433 connected to an arrival taxiway 2410 or 2440. The plurality of parking spaces 2403 and 2433 can be oriented perpendicularly to the length of the concrete runways 2401 and 2431, as shown in FIG. 51, although other orientations are within the scope of the present invention. Because each end of each parking space 2403 and 2433 is connected to a taxiway, a landed cargo drone may propel itself or otherwise be pulled by an in-ground track and tug into and out of a parking space 2403 or 2433 without the landed cargo drone needing to back up or move in reverse.

The plurality of parking spaces 2403 and 2433 can be part of a first refueling and reloading area (for the first concrete runway 2401) or a second refueling and reloading area (for the second concrete runway 2431). In each of the plurality of parking spaces 2403 and 2433, a landed cargo drone can be automatically or manually re-fueled using fuel from the first fuel tank farm 2408 or the second fuel tank farm 2438. While the landed cargo drone is being re-fueled, payload from the landed cargo drone can be loaded and unloaded using one of a first plurality of automated container carts 2414 (for the first concrete runway 2401) or a second plurality of automated container carts 2444 (for the second concrete runway 2431).

Each of the plurality of automated container carts 2414 and 2444 runs on a cart track 2415 or 2445 having a main trunk 2416 or 2446 and a plurality of trunk branches 2417 or 2447, each connected to the main trunk 2416 or 2446. For the first concrete runway 2401, the main trunk 2416 leads to the warehouse or holding area 2402, where outgoing containers 2418 can be stored and/or automatically or manually transferred to trucks via a shared truck access area 2419 or to trains via a shared rail access area 2420. Incoming containers 2421 from trucks via the shared truck access area 2419 or from trains via the shared rail access area 2420 can also be stored in the warehouse or holding area 2402 or transferred directly to the automated container carts 2414. For the second concrete runway 2431, the main trunk 2446 leads to the warehouse or holding area 2432, where outgoing containers 2448 can be stored and/or automatically or manually transferred to trucks via the shared truck access area 2419 or to trains via the shared rail access area 2420. Incoming containers 2451 from trucks via the shared truck access area 2419 or from trains via the shared rail access area 2420 can also be stored in the warehouse or holding area 2432 or transferred directly to the automated container carts 2444. Each of the plurality of trunk branches 2417 and 2447 can lead to an edge of the arrival taxiway 2410 or 2440, to the back end of one of the plurality of parking spaces 2403 or 2433, or partially or all the way into one of the plurality of parking spaces 2403 or 2433, to facilitate the loading and unloading of payload from a landed cargo drone.

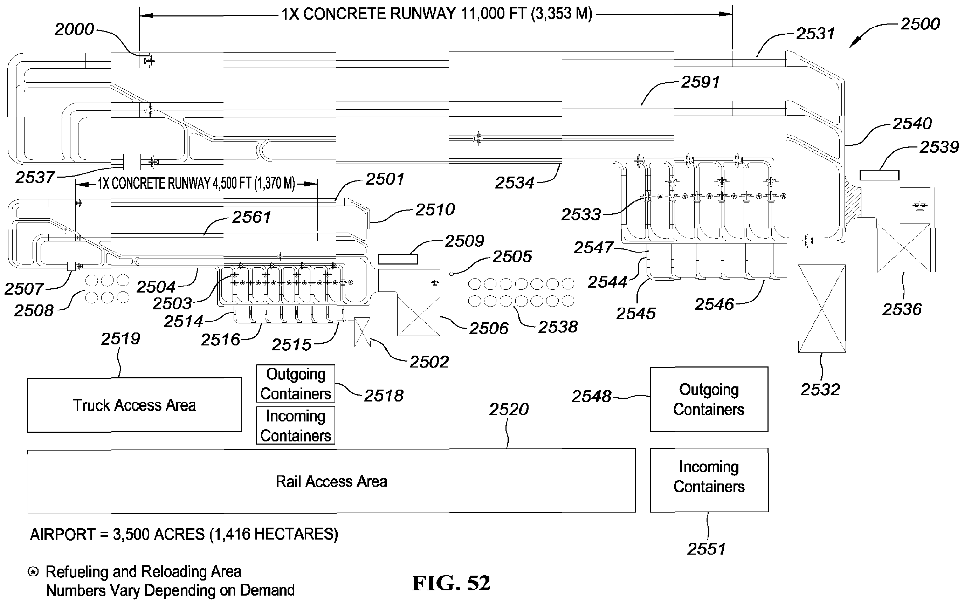

With reference to FIG. 52, there is shown a fifth embodiment of a drone- dedicated airport 2500 in accordance with the present invention. In this fifth embodiment, the drone-dedicated airport 2500 comprises a first concrete runway 2501 for take-off and landing of cargo drones 2000 up to the size of a C-130 aircraft or similar capable aircraft, a second concrete runway 2531 for take-off and landing of any size cargo drone 2000, a third concrete runway 2561 for take-off and landing of cargo drones 2000 up to the size of a C-130 aircraft or similar capable aircraft, and a fourth concrete runway 2591 for take-off and landing of any size cargo drone 2000. The drone-dedicated airport 2500 also has full ground facilities, including an air traffic control tower 2505, and full refueling capabilities. The airport 2500 itself comprises approximately 3,500 acres (14,16 hectares).

The first concrete runway 2501 and the third concrete runway 2561 can be approximately 3,000 to 8,000 feet (914 to 2,438 meters) long. In a particular embodiment, the runway 2501 can be approximately 4,500 feet (1,370 meters) long. The ground facilities for the first concrete runway 2501 and the third concrete runway 2561 can include a first warehouse or holding area 2502, a first aircraft maintenance/repair facility 2506, a first ice control facility 2507, a first fuel tank farm 2508, and a first fire station 2509. A plurality of first parking spaces 2503 can be connected to the first concrete runway 2501 and to the third concrete runway 2561 via a first departure taxiway 2504 and a first arrival taxiway 2510.

The second concrete runway 2531 and the fourth concrete runway 2591 can be approximately 11,000 feet (3,353 meters) long. The ground facilities for the second concrete runway 2531 and the fourth concrete runway 2591 can include a second warehouse or holding area 2532, a second aircraft maintenance/repair facility 2536, a second ice control facility 2537, a second fuel tank farm 2538, and a second fire station 2539. A plurality of second parking spaces 2533 can be connected to the second concrete runway 2531 and to the fourth concrete runway 2591 via a second departure taxiway 2534 and a second arrival taxiway 2540.

The plurality of parking spaces 2503 and 2533 in the fifth embodiment can be connected in parallel, with a front end of each parking space 2503 and 2533 connected to a departure taxiway 2504 or 2534 and a back end of each parking space 2503 and 2533 connected to an arrival taxiway 2510 or 2540. The plurality of parking spaces 2503 and 2533 can be oriented perpendicularly to the length of the concrete runways 2501, 2531, 2561 and 2591, as shown in FIG. 52, although other orientations are within the scope of the present invention. Because each end of each parking space 2503 and 2533 is connected to a taxiway, a landed cargo drone may propel itself or otherwise be pulled by an in-ground track and tug into and out of a parking space 2503 or 2533 without the landed cargo drone needing to back up or move in reverse.

The plurality of parking spaces 2503 and 2533 can be part of a first refueling and reloading area (for the first and third concrete runways 2501 and 2561) or a second refueling and reloading area (for the second and fourth concrete runways 2531 and 2591). In each of the plurality of parking spaces 2503 and 2533, a landed cargo drone can be automatically or manually re-fueled using fuel from the first fuel tank farm 2508 or the second fuel tank farm 2538. While the landed cargo drone is being re-fueled, payload from the landed cargo drone can be loaded and unloaded using one of a first plurality of automated container carts 2514 (for the first and third concrete runways 2501 and 2561) or a second plurality of automated container carts 2544 (for the second and fourth concrete runways 2531 and 2591).

Each of the plurality of automated container carts 2514 and 2544 runs on a cart track 2515 or 2545 having a main trunk 2516 or 2546 and a plurality of trunk branches 2517 or 2547, each connected to the main trunk 2516 or 2546. For the first and third concrete runways 2501 and 2561, the main trunk 2516 leads to the warehouse or holding area 2502, where outgoing containers 2518 can be stored and/or automatically or manually transferred to trucks via a shared truck access area 2519 or to trains via a shared rail access area 2520. Incoming containers 2521 from trucks via the shared truck access area 2519 or from trains via the shared rail access area 2520 can also be stored in the warehouse or holding area 2502 or transferred directly to the automated container carts 2514. For the second and fourth concrete runways 2531 and 2591, the main trunk 2546 leads to the warehouse or holding area 2532, where outgoing containers 2548 can be stored and/or automatically or manually transferred to trucks via the shared truck access area 2519 or to trains via the shared rail access area 2520. Incoming containers 2551 from trucks via the shared truck access area 2519 or from trains via the shared rail access area 2520 can also be stored in the warehouse or holding area 2532 or transferred directly to the automated container carts 2544. Each of the plurality of trunk branches 2517 and 2547 can lead to an edge of the arrival taxiway 2510 or 2540, to the back end of one of the plurality of parking spaces 2503 or 2533, or partially or all the way into one of the plurality of parking spaces 2503 or 2533, to facilitate the loading and unloading of payload from a landed cargo drone.

The above embodiments of a drone-dedicated airport can be combined with existing airport designs for piloted aircraft.

### Safety and Anti-Tamper Systems and Mechanisms

Embodiments of the technology disclosed herein are also directed toward safety and anti-tamper systems and mechanisms onboard a drone to protect the drone from internal and external threats. More particularly, various embodiments of the technology disclosed herein relate to ensuring that the drone flies its specified flight path and lands at the destination airport or at a designated alternative airport.

In one embodiment, the drone comprises internal mechanisms that prevent tampering with the aircraft structure as well as the drone's electronic, electrical, guidance, and control systems. The drone can have the ability to take pictures and record video in sensitive areas. The drone can also have the ability to sense any tampering with electrical or
communication wires. Additionally, the drone can have a primary electrical system and a secondary electrical system. Furthermore, the drone can use encrypted internal communications to provide a barrier against unauthorized access to communications with flight-critical systems.

In another embodiment, a thumbprint of electrical resistance, data storage, or a fixed physical constant of the aircraft can be used to sense unauthorized access in the event that there are changes to the thumbprint. Encrypted communication keys can also be embedded in the electronic, electrical, guidance, and control systems so that replacing a component requires an authentication key for the replacement component to function within the systems. In these ways, the drone can be designed with tamper-resistant and tamper-proof electronic, electrical, guidance, and control systems to prevent tampering.

In a further embodiment, artificial intelligence (Al) monitors the aircraft continuously and alerts a control center of any suspected tampering.

Embodiments of the technology disclosed herein are also directed toward systems to ensure that the containers carried by the drones hold what their manifest states that they hold and that the containers are structurally sound.

In one embodiment, all containers transported overseas are x-rayed using machines that are programmed to sense illicit or illegal cargo. The x-rays can be used both to inspect the goods inside the container and to provide an indication of any changes to the container structural footprint.

In another embodiment, all containers transported overseas are inspected via neutrons, similar to x-rays, and can detect substances such as uranium or plutonium.

In another embodiment, the container is inspected by electronic sniffers that can detect unwanted substances contained in the container.

In another embodiment, the structural integrity of a container is tested by placing the container in a jig that applies a known load. The deflection of the container is then measured to ensure that the deflection is within acceptable limits.

In a further embodiment, once a container is approved for flight, the container has all data from the x-ray, other detection instruments, deflection, and other tests embedded into an onboard tamper-proof electronic system. Any attempts to open the container after inspection will corrupt the data and require re-inspection of the entire container.

In one embodiment, the data is contained in a blockchain format, making it very hard to change the data once it is recorded.

Embodiments of the technology disclosed herein are also directed toward protecting drones from external threats. More particularly, various embodiments of the technology disclosed herein relate to protecting drones from jamming, GPS interference signals, and attempts by other aircraft to hijack the drone.

In one embodiment, the drone has multiple redundant position location systems, including GPS, laser gyros, and cameras able to view the sun and/or star and/or moon and/or physical locations. Onboard AI can cross-check the GPS results with the onboard laser gyros to make sure that the two correlate. If the GPS results and the onboard laser gyros do not correlate, then the AI can attempt to ascertain the drone's correct location from known aircraft speeds, aircraft orientation, and similar data.

In another embodiment, the onboard AI can also transmit information to an external control entity. The transmissions can be made via encrypted keys to ensure that no tampering with aircraft communications has occurred.

The non-limiting embodiments of the present invention described and claimed herein are not to be limited in scope by the specific embodiments disclosed herein, as these embodiments are intended as illustrations of several aspects of the invention. Indeed, various modifications of the invention in addition to those shown and described herein will become apparent to those skilled in the art from the foregoing description.

## Claims

1. An aircraft (110) for carrying a cargo assembly (105), the aircraft comprising:
a spine structure (30) including a first end, a second end, and mounts (72, 122, 176) to structurally engage the cargo assembly in juxtaposition with the spine structure between the first and second ends;
the aircraft **characterized in** a pre-load system comprising
a first load transfer structure (160) coupled to the first end,
a second load transfer structure (170) coupled to the second end,
a linking structure (220) coupled to the first and second load transfer structures, and
a tensioning mechanism (300) coupled to the linking structure;
wherein the tensioning mechanism is configured to apply varying levels of tension to the linking structure.

2. The aircraft of claim 1, wherein the linking structure is a cable.

3. The aircraft of any one of the preceding claims, wherein at least a portion of the second load transfer structure is removable from the second end of the spine structure.

4. The aircraft of any one of the preceding claims, wherein the second load transfer structure is pivotally mounted to the frame spine structure, such that at least a portion of the second load transfer structure can pivot away from the spine structure.

5. The aircraft of any one of the preceding claims, further comprising an aft fairing (133);
wherein the second load transfer structure is attached to the aft fairing.

6. The aircraft of claim 5, wherein the aft fairing comprises two halves, each of the two halves configured to pivotally actuate away from the spine structure.

7. The aircraft of any one of the preceding claims, wherein:
the linking structure has a first end and a second end; and
the first end of the linking structure is coupled to the tensioning mechanism.

8. The aircraft of claim 7, wherein:
the pre-load system further comprises a retaining member (400); and
the second end of the linking structure is coupled to the retaining member.

9. The aircraft of claim 8, wherein:
the second end of the linking structure comprises one of a mating pair (500);
the retaining member is a retaining bar; and
the retaining bar comprises another one of the mating pair.

10. The aircraft of claim 9, wherein:
the pre-load system further comprises a retaining frame (600);
the second end of the linking structure is coupled to the retaining frame; and
the retaining frame is removably coupled to the spine structure.

11. The aircraft of claim 10, wherein the retaining frame is removably coupled to one of the first or second load transfer structure.

12. The aircraft of any one of the preceding claims, wherein the linking structure is configured to extend across a top of the cargo assembly.

13. The aircraft of any one of the preceding claims, wherein:
one or both of the first and second load transfer structure comprises a plurality of struts extending from a top surface of the spine; and
each one of the plurality of struts is coupled to a linking mechanism.

14. The aircraft of claim 13, wherein the plurality of struts comprise lower and upper struts.

15. The aircraft of claim 14, wherein the lower struts are configured to be coupled on one end to the spine structure and on an opposing end to one or both of a lower and a upper row of the cargo assembly.

16. The aircraft of claim 1, wherein the tensioning mechanism is further configured to vary a stiffness of the aircraft, resulting in improved flutter control.

## Patentansprüche

1. Luftfahrzeug (110) für das Befördern einer Lastanordnung (105), das Luftfahrzeug umfassend:
Eine Rückgratstruktur (30), die ein erstes Ende, ein zweites Ende und Befestigungen (72, 122, 176) beinhaltet, um strukturell in die Lastanordnung direkt neben der Rückgratstruktur zwischen dem ersten und dem zweiten Ende einzugreifen;
das Luftfahrzeug ist **gekennzeichnet durch** ein Vorlastsystem, umfassend
eine erste Lastübertragungsstruktur (160), die mit dem ersten Ende gekoppelt ist,
eine zweite Lastübertragungsstruktur (170), die mit dem zweiten Ende gekoppelt ist,
eine Verbindungsstruktur (220), die mit der ersten und der zweiten Lastübertragungsstruktur gekoppelt ist, und
einen Spannmechanismus (300), der mit der Verbindungsstruktur gekoppelt ist;
wobei der Spannmechanismus konfiguriert ist, verschiedene Spannungsniveaus auf die Verbindungsstruktur anzuwenden.

2. Luftfahrzeug nach Anspruch 1, wobei die Verbindungsstruktur ein Kabel ist.

3. Luftfahrzeug nach einem der vorhergehenden Ansprüche, wobei mindestens ein Abschnitt der zweiten Lastübertragungsstruktur von dem zweiten Ende der Rückgratstruktur abnehmbar ist.

4. Luftfahrzeug nach einem der vorhergehenden Ansprüche, wobei die zweite Lastübertragungsstruktur drehbar an der Rahmen-Rückgratstruktur montiert ist, so dass sich mindestens ein Abschnitt der zweiten Lastübertragungsstruktur von der Rückgratstruktur wegdrehen kann.

5. Luftfahrzeug nach einem der vorhergehenden Ansprüche, ferner umfassend eine hintere Verkleidung (133);
wobei die zweite Lastübertragungsstruktur an der hinteren Verkleidung befestigt ist.

6. Luftfahrzeug nach Anspruch 5, wobei die hintere Verkleidung zwei Hälften umfasst und die beiden Hälften konfiguriert sind, sich drehbar weg von der Rückgratstruktur zu bewegen.

7. Luftfahrzeug nach einem der vorhergehenden Ansprüche, wobei:
Die Verbindungsstruktur ein erstes Ende und ein zweites Ende hat; und
das erste Ende der Verbindungsstruktur mit dem Spannmechanismus gekoppelt ist.

8. Luftfahrzeug nach Anspruch 7, wobei:
Das Vorlastsystem ferner ein Halteteil (400) umfasst; und
das zweite Ende der Verbindungsstruktur mit dem Halteteil gekoppelt ist.

9. Luftfahrzeug nach Anspruch 8, wobei:
das zweite Ende der Verbindungsstruktur ein Teil eines Fügepaars (500) umfasst;
das Halteteil eine Haltestange ist; und
die Haltestange ein weiteres Teil des Fügepaars umfasst.

10. Luftfahrzeug nach Anspruch 9, wobei:
Das Vorlastsystem ferner einen Halterahmen (600) umfasst;
das zweite Ende der Verbindungsstruktur mit dem Halterahmen gekoppelt ist; und
der Halterahmen abnehmbar mit der Rückgratstruktur gekoppelt ist.

11. Luftfahrzeug nach Anspruch 10, wobei der Halterahmen abnehmbar entweder mit der ersten oder der zweiten Lastübertragungsstruktur gekoppelt ist.

12. Luftfahrzeug nach einem der vorhergehenden Ansprüche, wobei die Verbindungsstruktur konfiguriert ist, sich über eine Oberseite der Lastanordnung zu erstrecken.

13. Luftfahrzeug nach einem der vorhergehenden Ansprüche, wobei:
Eine oder beide der ersten und der zweiten Lastübertragungsstrukturen eine Vielzahl von Streben umfasst/umfassen, die sich von einer oberen Fläche des Rückgrats erstrecken; und
jede der Vielzahl von Streben mit einem Verbindungsmechanismus gekoppelt ist.

14. Luftfahrzeug nach Anspruch 13, wobei die Vielzahl der Streben untere und obere Streben umfasst.

15. Luftfahrzeug nach Anspruch 14, wobei die unteren Streben so konfiguriert sind, dass sie an einem Ende mit der Rückgratstruktur und am gegenüberliegenden Ende mit einer oder beiden einer unteren und oberen Reihe der Lastanordnung gekoppelt sind.

16. Luftfahrzeug nach Anspruch 1, wobei der Spannungsmechanismus ferner konfiguriert ist, die Steifigkeit des Luftfahrzeugs zu variieren, was zu einer verbesserten Flatterregelung führt.

## Revendications

1. Aéronef (110) servant à transporter un ensemble de chargement (105), l'aéronef comprenant :
une structure dorsale (30) comportant une première extrémité, une seconde extrémité, et des dispositifs de montage (72, 122, 176) pour s'insérer de manière structurale dans l'ensemble de chargement en juxtaposition avec la structure dorsale entre les première et seconde extrémités ;
l'aéronef se **caractérise par** un système de précharge comprenant
une première structure de transfert de charge (160) accouplée à la première extrémité,
une seconde structure de transfert de charge (170) accouplée à la seconde extrémité, et
une structure de liaison (220) accouplée aux première et seconde structures de transfert de charge, et
un mécanisme de tension (300) accouplé à la structure de liaison ;
dans lequel le mécanisme de tension étant conçu pour appliquer différents niveaux de tension à la structure de liaison.

2. Aéronef selon la revendication 1 dans lequel la première structure de liaison est un câble.

3. Aéronef selon l'une quelconque des revendications précédentes, dans lequel au moins une partie de la seconde structure de transfert de charge peut être déplacée de la seconde extrémité de la structure dorsale.

4. Aéronef selon l'une quelconque des revendications précédentes, dans lequel la seconde structure de transfert de charge est montée de manière pivotante sur la structure dorsale du cadre, de sorte qu'au moins une partie de la seconde structure de transfert de charge peut pivoter en s'éloignant de la structure dorsale.

5. Aéronef selon l'une quelconque des revendications précédentes, comprenant en outre un carénage arrière (133) :
dans lequel la seconde structure de transfert de charge est fixée au carénage arrière.

6. Aéronef selon la revendication 5, dans lequel le carénage arrière comprend deux moitiés, chacune des deux moitiés étant conçue pour s'actionner de manière pivotante en s'éloignant de la structure dorsale.

7. Aéronef selon l'une quelconque des revendications précédentes, dans lequel :
la structure de liaison présente une première extrémité et une seconde extrémité ; et
la première extrémité de la structure de liaison est accouplée au mécanisme de tension.

8. Aéronef selon la revendication 7, dans lequel :
le système de précharge comprend en outre un élément de retenue (400) ; et
la seconde extrémité de la structure de liaison est accouplée à l'élément de retenue.

9. Aéronef selon la revendication 8, dans lequel :
la seconde extrémité de la structure de liaison comprend une paire d'accouplement (500) ;
l'élément de retenue est une barre de retenue ; et
la barre de retenue comprend une autre barre de la paire d'accouplement.

10. Aéronef selon la revendication 9, dans lequel :
le système de précharge comprend en outre un cadre de retenue (600) ;
la seconde extrémité de la structure de liaison est accouplée au cadre de retenue ; et
le cadre de retenue est accouplé de manière amovible à la structure dorsale.

11. Aéronef selon la revendication 10, dans lequel le cadre de retenue est accouplé de manière amovible à l'une parmi la première ou la seconde structure de transfert de charge.

12. Aéronef selon l'une quelconque des revendications précédentes, dans lequel la structure de liaison est conçue pour s'étendre sur toute une partie supérieure de l'ensemble de chargement.

13. Aéronef selon l'une quelconque des revendications précédentes, dans lequel :
l'une et/ou l'autre parmi la première et/ou la seconde structure de transfert de charge comprennent une pluralité d'entretoises s'étendant à partir d'une surface supérieure de la partie dorsale ; et
chaque entretoise de la pluralité d'entretoises est accouplée à un mécanisme de liaison.

14. Aéronef selon la revendication 13, dans lequel la pluralité d'entretoises comprend des entretoises inférieure et supérieure.

15. Aéronef selon la revendication 14, dans lequel les entretoises inférieures sont conçues pour être accouplées sur une extrémité à la structure dorsale et sur une extrémité opposée l'une et/ou l'autre parmi une rangée inférieure et/ou d'une rangée supérieure de l'ensemble de chargement.

16. Aéronef selon la revendication 1, dans lequel le mécanisme de tension est conçu en outre pour faire varier une rigidité de l'aéronef, ce qui a pour résultat une commande de flottement améliorée.
